(19) Europäisches Patentamt
European Patent Office
Office européen des brevets

(11) EP 3 479 285 B1

(12) FASCICULE DE BREVET EUROPEEN

(45) Date de publication et mention de la délivrance du brevet:
**01.04.2020 Bulletin 2020/14**

(21) Numéro de dépôt: **17740444.9**

(22) Date de dépôt: **22.06.2017**

(51) Int Cl.:
*G06F 21/57* (2013.01)     *H04L 29/06* (2006.01)

(86) Numéro de dépôt international:
**PCT/FR2017/051668**

(87) Numéro de publication internationale:
**WO 2018/002484 (04.01.2018 Gazette 2018/01)**

(54) **PROCÉDÉ ET DISPOSITIF DE SURVEILLANCE DE LA SÉCURITÉ D'UN SYSTÈME D'INFORMATION**

VERFAHREN UND VORRICHTUNG ZUR ÜBERWACHUNG DER SICHERHEIT EINES INFORMATIONSSYSTEMS

METHOD AND DEVICE FOR MONITORING THE SECURITY OF AN INFORMATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2016 FR 1656294**

(43) Date de publication de la demande:
**08.05.2019 Bulletin 2019/19**

(73) Titulaire: **Orange**
**75015 Paris (FR)**

(72) Inventeurs:
• **NAGHMOUCHI, Mohamed Yassine**
**92230 Gennevilliers (FR)**
• **PERROT, Nancy**
**92130 Issy Les Moulineaux (FR)**
• **KHEIR, Nizar**
**92326 CHATILLON CEDEX (FR)**
• **WARY, Jean-Philippe**
**67000 Strasbourg (FR)**

(56) Documents cités:
**EP-A2- 1 768 045     US-B1- 9 210 185**

• **Laura Paintori Swiler ET AL: "SANDIA REPORT A Grap h-Based Network-Vulnerability Analysis System", , 9 mars 1998 (1998-03-09), XP055352609, Extrait de l'Internet: URL:https://www.osti.gov/scitech/servlets/ purl/573291 [extrait le 2017-03-08]**

**Description**

Arrière-plan de l'invention

L'invention se rapporte au domaine général des systèmes informatiques aussi appelés systèmes d'information.
Elle concerne plus particulièrement la surveillance d'un système d'information (i.e. d'un système de télécommunications) comprenant plusieurs biens ou éléments matériels et/ou virtuels reliés entre eux, et au moins un point d'accès à ces biens ou éléments.
Au sens de l'invention, un bien ou un élément d'un système d'information désigne une entité utilisée pour réaliser un service donné (ex. calcul, routage, stockage, etc.). Il peut être physique, c'est-à-dire matériel (comme par exemple une base de données, un centre de données (ou « data center » en anglais), un terminal, un routeur, un aiguilleur (ou « switch » en anglais), etc.), ou virtuel (il peut s'agir par exemple d'une fonction réseau dans un réseau programmable ou SDN (pour « Software Defined Network »), d'une machine virtuelle dans un système informatique en nuage (ou « cloud » en anglais), etc.). Les biens dans un système d'information sont liés par des liens physiques ou virtuels.
L'existence de points d'accès à ces systèmes d'information les rend vulnérables à différents types d'attaques extérieures susceptibles d'être menées depuis ces points d'accès. Lors d'une telle attaque, chaque élément du système est susceptible d'être endommagé et d'entrainer un dysfonctionnement du système d'information, ainsi qu'une menace de l'intégrité des informations qu'il détient.
L'ensemble des politiques relatives à la gestion de la sécurité de l'information et leur application dans un périmètre cible à protéger (ex. sur un système d'information donné) est regroupé sous l'appellation de Système de Management de la Sécurité de l'Information (SMSI). L'installation d'un SMSI s'inscrit généralement dans une démarche globale d'amélioration et d'ajustement continu du niveau de la sécurité du périmètre cible, aussi connue sous le terme de roue de Deming ou PDCA (« Plan, Do, Check, Act »). Plus précisément, cette démarche s'appuie sur quatre étapes principales, parcourues de manière itérative, à savoir :

- une première étape de planification (« Plan »), qui consiste à élaborer la politique de sécurité pour le périmètre cible à protéger, à définir des objectifs de sécurité, et à analyser des risques de sorte à lister et qualifier les menaces existant pour le périmètre cible ;
- une deuxième étape de déploiement (« Do ») de mesures de sécurité et d'application de contremesures spécifiques afin de ramener le risque à un niveau acceptable ;
- une troisième étape de vérification (« Check ») consistant en un audit et une supervision de la sécurité, et en la détection d'attaques ou de nouvelles menaces ; et
- une quatrième étape d'actions correctives (« Act ») visant à mettre à jour la politique de sécurité. A l'issue de cette quatrième étape, la première étape est reprise, etc.

En vue d'établir un référentiel unique pour la gestion de la sécurité dans les systèmes d'information, l'Organisation Internationale de la Normalisation (ISO) a établi une série de normes, dont la norme ISO 27001, qui proposent une démarche de management et d'amélioration continue de la sécurité de type PDCA. La norme ISO 27001 explicite plus particulièrement une démarche de gestion de risques, qui se décline en plusieurs étapes métiers, telles que faire l'inventaire de toutes les ressources à protéger dans le système, définir les objectifs de sécurité, mesurer les vulnérabilités inhérentes à l'architecture du système ainsi que les risques que ces vulnérabilité induisent, et proposer et implémenter des contre-mesures qui satisfont le meilleur compromis coût/sécurité. Toutefois, bien que la norme ISO 27001 spécifie la démarche à suivre, elle ne propose pas ni ne fournit d'outils automatisés permettant de l'implémenter dans un environnement cible.
Plusieurs outils disponibles dans le commerce permettent de modéliser et de calculer un niveau de risque global associé à un système d'information dans un environnement de production. De tels outils s'appuient notamment sur des graphes dits d'attaque, utilisés pour analyser les risques associés aux vulnérabilités affectant le système d'information. Selon une définition couramment admise (cf. Wikipédia par exemple) dans le domaine de la sécurité des systèmes d'information, une vulnérabilité est une faille ou une faiblesse d'un système d'information permettant à un attaquant de porter atteinte à l'intégrité de ce système, c'est-à-dire à son fonctionnement normal ainsi qu'à la confidentialité et à l'intégrité des données qu'il contient. Une telle vulnérabilité peut être la conséquence par exemple de faiblesses dans la conception du système d'information ou liées à l'utilisation d'un composant matériel ou logiciel particulier, ou être due à l'exploitation de pannes logicielles affectant certains biens du système d'information.
Les graphes d'attaques permettent de mettre en évidence l'effet cumulatif des attaques au sein du système d'information. Chaque chemin dans le graphe d'attaque porte sur un état indésirable, tel que par exemple obtenir un accès administrateur d'une base de données. Ces graphes d'attaque sont souvent générés manuellement et s'appuient sur une modélisation statique du système d'information. Toute mise à jour de l'environnement (comme par exemple la création d'un nouveau bien, une nouvelle connexion établie entre deux biens, une ouverture de flux réseau, etc.), entraine une nouvelle phase complète de modélisation (génération d'un nouveau graphe d'attaque) et de calcul de risque.

Or, les systèmes d'information aujourd'hui sont de plus en plus hétérogènes, complexes et dynamiques, notamment en raison de l'avènement de nouvelles technologies telles que la virtualisation des réseaux (ex. réseaux programmables de type SDN, virtualisation des fonctions réseaux NFV (Network Function Virtualization)) et des systèmes d'information (architectures de type cloud). De nouveaux biens ou éléments (ex. machines virtuelles, composantes logicielles, services applicatifs, centre de données, etc.) peuvent apparaitre et/ou disparaitre dans ces systèmes à tout moment. De même, de nouveaux liens ou de nouvelles dépendances entre les biens peuvent être établis et/ou modifiés durant la phase d'exploitation du système. Il en résulte que de nouvelles vulnérabilités peuvent apparaitre dans le système d'information, les accès au système étant en outre susceptibles de changer au cours du temps. Délivrer le niveau de service (ou SLA pour « Service Level Agreement ») souhaitable et souhaité dans un système d'information dépend donc en grande partie de la capacité du responsable de la sécurité du système d'information à assurer la sécurité des biens dans un système complexe et dynamique.

Or les graphes d'attaques sont incapables de fournir une analyse de risque prenant en considération cette dynamique et cette complexité dans les systèmes, et s'avèrent donc insuffisants pour répondre aux caractéristiques actuelles des systèmes d'information et aux défis importants en résultant. Il est donc difficile avec les graphes d'attaque d'envisager des mesures de sécurité optimales pour le système d'information d'un point de vue compromis coût/sécurité. En raison de ces limitations, les outils disponibles aujourd'hui ne permettent pas de répondre efficacement aux attaques susceptibles de menacer les systèmes d'information actuels.

US9210185 décrit un système de surveillance de la sécurité d'un système informatique.

Il existe donc un besoin d'avoir une procédure de surveillance et d'analyse du risque d'un système d'information qui permet de prendre en compte de façon native les aspects dynamiques d'un système d'information et son évolution dans le temps.

Objet et résumé de l'invention

L'invention répond notamment à ce besoin en proposant un procédé de surveillance de la sécurité d'un système d'information comprenant une pluralité d'éléments et au moins un point d'accès à ces éléments, au moins un élément du système d'information étant susceptible d'être affecté par au moins une vulnérabilité, chaque vulnérabilité susceptible d'affecter un élément étant associée à une probabilité d'occurrence et à un impact sur l'élément, ledit procédé de surveillance comprenant, pour au moins un état du système d'information :

- une étape de modélisation du système d'information dans ledit état par un graphe comprenant une pluralité de nœuds, chaque nœud du graphe correspondant à un couple formé d'un élément et d'une vulnérabilité susceptible de l'affecter ou à un point d'accès, ledit graphe étant tel que deux nœuds du graphe dits premier et deuxième nœuds sont reliés par un arc :

  ◦ bidirectionnel, si lesdits nœuds correspondent au même élément ;
  ◦ orienté du premier nœud vers le deuxième nœud, si l'exploitation de ladite vulnérabilité du premier nœud lors d'une attaque depuis un point d'accès entraine l'exploitation de ladite vulnérabilité du deuxième nœud,
  cet arc étant associé à une métrique dite d'accessibilité mesurant une fréquence de connexion dans le système d'information entre l'élément du premier nœud et l'élément du deuxième nœud correspondant audit état ;

- une étape d'évaluation, pour chaque nœud d'un ensemble de nœuds du graphe identifiés comme critiques, d'une métrique de sécurité du nœud représentant un niveau de risque encouru par l'élément du nœud d'être affecté par la vulnérabilité de ce nœud lors d'attaques menées contre le système d'information depuis ledit au moins un point d'accès, la métrique de sécurité du nœud étant évaluée en utilisant l'impact associé à la vulnérabilité du nœud, ainsi que les probabilités d'occurrence des vulnérabilités des nœuds et les métriques d'accessibilité des arcs d'au moins un chemin du graphe existant entre le nœud et ledit au moins un point d'accès ;
- une étape de détermination d'une métrique de sécurité globale du système d'information dans ledit état en cumulant les métriques de sécurité évaluées des nœuds de l'ensemble de nœuds critiques du graphe ;

le procédé de surveillance comprenant en outre une étape de surveillance de la sécurité du système d'information utilisant la métrique de sécurité globale du système d'information déterminée correspondant audit au moins un état.

Corrélativement, l'invention vise également un dispositif de surveillance de la sécurité d'un système d'information comprenant une pluralité d'éléments et au moins un point d'accès à ces éléments, au moins un élément du système d'information étant susceptible d'être affecté par au moins une vulnérabilité, chaque vulnérabilité susceptible d'affecter un élément étant associée à une probabilité d'occurrence et à un impact sur l'élément, ce dispositif de surveillance comprenant une pluralité de modules activés pour au moins un état du système d'information, ces modules comprenant :

- un module de modélisation, configuré pour modéliser le système d'information dans ledit état par un graphe comprenant une pluralité de nœuds, chaque nœud du graphe correspondant à un couple formé d'un élément et d'une vulnérabilité susceptible de l'affecter ou à un point d'accès, ledit graphe étant tel que deux nœuds du graphe dits premier et deuxième nœuds sont reliés par un arc :

  ◦ bidirectionnel, si lesdits nœuds correspondent au même élément ;
  ◦ orienté du premier nœud vers le deuxième nœud, si l'exploitation de la vulnérabilité du premier nœud lors d'une attaque depuis un point d'accès entraine l'exploitation de la vulnérabilité du deuxième nœud,

  cet arc étant associé à une métrique dite d'accessibilité mesurant une fréquence de connexion dans le système d'information entre l'élément du premier nœud et l'élément du deuxième nœud correspondant audit état ;
- un module d'évaluation, configuré pour évaluer pour chaque nœud d'un ensemble de nœuds du graphe identifiés comme critiques, d'une métrique de sécurité du nœud représentant un niveau de risque encouru par l'élément du nœud d'être affecté par la vulnérabilité de ce nœud lors d'attaques menées contre le système d'information depuis ledit au moins un point d'accès, la métrique de sécurité du nœud étant évaluée en utilisant l'impact associé à la vulnérabilité du nœud, ainsi que les probabilités d'occurrence des vulnérabilités des nœuds et les métriques d'accessibilité des arcs d'au moins un chemin du graphe existant entre le nœud et ledit au moins un point d'accès ;
- un module de détermination, configuré pour déterminer une métrique de sécurité globale du système d'information dans ledit état en cumulant les métriques de sécurité évaluées des nœuds de l'ensemble de nœuds critiques du graphe ;

le dispositif de surveillance comprenant en outre un module de surveillance de la sécurité du système d'information configuré pour utiliser la métrique de sécurité globale du système d'information déterminée correspondant audit au moins un état.

Au sens de l'invention, l'état d'un système d'information dépend non seulement de sa topologie, mais également de différents paramètres qui le caractérisent et qui impactent sa sécurité, à savoir notamment les fréquences de connexion de ses éléments (et qui traduit l'accessibilité des éléments du système d'information par d'autres éléments de ce système ou par des points d'accès au système), etc.

L'invention propose donc une solution permettant de surveiller la sécurité d'un système d'information dont l'état est susceptible d'évoluer au cours du temps, cette solution étant basée sur une modélisation du système d'information au moyen d'un graphe tenant compte non seulement de la topologie du système d'information dans chaque état considéré (biens/éléments et points d'accès du système d'information ainsi que des connexions existant entre ces éléments et points d'accès), mais aussi des vulnérabilités (et leurs conséquences) susceptibles d'affecter la sécurité de chacun des biens du système d'information lors d'une attaque. Comme mentionné précédemment, par vulnérabilité on entend dans le domaine de la sécurité des systèmes d'information, une faille ou une faiblesse du système d'information permettant à un attaquant de porter atteinte à l'intégrité de ce système, c'est-à-dire à son fonctionnement normal ainsi qu'à la confidentialité et à l'intégrité des données qu'il contient.

Le graphe proposé par l'invention modélise avantageusement toutes les attaques possibles sur le système d'information, via notamment la modélisation des points d'accès et l'association d'un nœud distinct du graphe à chaque vulnérabilité susceptible d'affecter un élément et de résulter de telles attaques. Il modélise également tous les scénarii d'attaques possibles via la modélisation de l'accessibilité des éléments du système d'information au moyen d'arcs du graphe.

Une telle modélisation peut être mise à jour facilement et de façon automatique pour tenir compte d'une évolution de l'état du système d'information, par exemple en raison d'une évolution de sa topologie (ex. ajout ou suppression d'éléments dans le système d'information) ou de paramètres le caractérisant comme par exemple les fréquences de connexion de ses éléments.

Aucune limitation n'est attachée à la façon dont un tel changement d'état du système d'information est détecté. Ainsi, dans un mode particulier de réalisation, les éléments et/ou les vulnérabilités correspondant aux nœuds du graphe modélisant le système d'informations sont déterminés en interrogeant de façon périodique ou prédéterminée au moins une base décrivant une topologie du système d'information et/ou une base décrivant des vulnérabilités susceptibles d'affecter des éléments du système d'information.

Le procédé de surveillance peut alors comprendre une étape de détection d'au moins un changement dans ladite au moins une base décrivant la topologie du système d'information résultant en un nouvel état du système d'information, cette étape de détection déclenchant l'application des étapes du procédé de surveillance au nouvel état du système d'information.

De façon similaire, le procédé de surveillance peut comprendre une étape de détection d'au moins un changement dans ladite au moins une base décrivant les vulnérabilités susceptibles d'affecter des éléments du système d'information, cette étape de détection déclenchant la mise en œuvre des étapes du procédé de surveillance en tenant compte dudit au moins un changement détecté.

On peut également envisager de répéter les étapes du procédé de surveillance de façon périodique ou à des instants prédéterminés pour capturer d'éventuels changements d'états du système d'information.

Par ailleurs, la modélisation proposée par l'invention permet de modéliser facilement une évolution dans le temps de certains paramètres susceptibles d'impacter la sécurité du système d'information, comme par exemple de l'accessibilité des éléments du système d'information ou des probabilités d'occurrence des vulnérabilités susceptibles d'affecter ces éléments. Des valeurs d'accessibilité ou de probabilités d'occurrence modélisant ces évolutions peuvent être fournies au dispositif de surveillance pour évaluer le cas échéant un nouveau graphe et/ou de nouvelles métriques. En variante, il est possible d'utiliser au cours du procédé de surveillance des fonctions variant dans le temps et prédisant les évolutions des paramètres précités. Un graphe distinct et une métrique de sécurité globale peuvent être générés pour chaque état distinct du système d'information atteint à différents instants ou pour chaque évolution prédite des vulnérabilités. La modélisation proposée par l'invention est donc particulièrement bien adaptée pour capturer et refléter le caractère dynamique des systèmes d'information actuels.

Les métriques de sécurité évaluées sur le graphe conformément à l'invention permettent avantageusement de tenir compte de la propagation d'un risque sur l'ensemble du système d'information grâce aux informations disponibles au niveau de chaque nœud et de chaque arc du graphe (i.e. probabilité d'occurrence et impact de chaque vulnérabilité associée à un nœud, ainsi que métrique d'accessibilité entre deux nœuds). En particulier, les métriques d'accessibilité associées aux arcs du graphe et la représentation des points d'accès dans le graphe permettent de prendre en considération, pour évaluer le risque affectant la sécurité du système d'information, non seulement l'exploitation directe d'une vulnérabilité au niveau d'un élément du système d'information mais également la façon dont cette vulnérabilité est susceptible d'être exploitée au travers d'autres vulnérabilités. Autrement dit, la modélisation adoptée par l'invention permet de tenir compte de la propagation de l'attaque au sein du système d'information.

Grâce à la fourniture de telles métriques de sécurité, l'invention propose une évaluation fiable du risque global encouru par le système d'information (ainsi que du risque présent au niveau de chaque élément du système d'information), et offre ainsi un moyen d'adopter de façon éclairée des solutions efficaces pour assurer la sécurité du système d'information et vérifiant un bon compromis (voire un compromis optimal) coût/sécurité.

Lorsque plusieurs états du système d'information sont pris en compte, la surveillance permise par l'invention peut prendre en compte une évolution temporelle de ce risque global et permettre l'adaptation des contre-mesures mises en œuvre pour diminuer ce risque.

On note que l'étape de surveillance du procédé selon l'invention qui utilise la métrique de sécurité globale évaluée par l'invention peut consister à proposer des contre-mesures permettant d'améliorer la sécurité du système d'information ou tout simplement à notifier une alerte le cas échéant permettant de déclencher la mise en place de contre-mesures, par exemple lorsque la métrique de sécurité globale est supérieure à un seuil de risque prédéterminé. L'invention ne se limite pas à l'adoption de contre-mesures particulières. En outre, cette étape peut être mise en œuvre par une entité distincte de l'entité mettant en œuvre les étapes de modélisation, d'estimation et de détermination.

Dans un mode particulier de réalisation de l'invention, l'ensemble déterminé de nœuds du graphe identifiés comme critiques considéré pour évaluer la métrique de sécurité globale comprend tous les nœuds du graphe.

Autrement dit, dans ce mode de réalisation, tous les éléments du système d'information et toutes les vulnérabilités susceptibles d'endommager ces éléments sont considérés comme critiques. Cela permet de prendre en compte l'impact de chaque vulnérabilité et de chaque élément du système d'information sur la sécurité de ce dernier.

En variante, on peut envisager de sélectionner seulement un sous-ensemble de nœuds du graphe, par exemple parce que les éléments associés à ces nœuds sont particulièrement exposés ou parce que les solutions permettant de protéger certains éléments sont plus coûteuses, etc.

Dans un mode particulier de réalisation de l'invention, l'étape d'évaluation de la métrique de sécurité d'un nœud comprend, pour chaque point d'accès :

- une détermination d'un plus court chemin entre ce point d'accès et ledit nœud ;
- une évaluation d'une métrique de sécurité dite propagée entre le point d'accès et ledit nœud sur le plus court chemin, en utilisant :

    ○ l'impact de la vulnérabilité du nœud sur l'élément du nœud, et
    ○ les probabilités d'occurrence des vulnérabilités des nœuds et les métriques d'accessibilité des arcs appartenant au plus court chemin ;

La métrique de sécurité du nœud étant évaluée en cumulant les métriques de sécurité propagées évaluées entre chaque point d'accès et ce nœud.

A cet effet, par exemple, la métrique de sécurité propagée entre le point d'accès et le nœud sur le plus court chemin est égale au produit de l'impact de la vulnérabilité du nœud sur l'élément du nœud et d'une métrique d'occurrence propagée sur le plus court chemin, cette métrique d'occurrence propagée étant obtenue en sommant sur chaque nœud du plus court chemin, le logarithme de l'inverse du produit de la métrique d'accessibilité associée à l'arc reliant ce nœud au nœud suivant sur le chemin (i.e. nœud lui succédant et donc relié audit nœud) et de la fréquence d'occurrence de la vulnérabilité du nœud suivant.

Ce mode de réalisation ramène avantageusement l'estimation du risque global affectant la sécurité du système d'information à un calcul de plus court chemin au sein du graphe. Des algorithmes très efficaces comme l'algorithme de Dijkstra existent pour traiter simplement et efficacement ce type de calcul, ce qui facilite la mise en œuvre de l'invention.

Il convient de noter que ce mode de réalisation s'appuie sur une hypothèse de pire cas selon laquelle un attaquant choisit parmi plusieurs chemins possibles dans le système d'information le chemin le plus risqué, c'est-à-dire celui qui présente une propagation maximale du risque et de l'attaque. L'invention offre toutefois la possibilité de faire des hypothèses alternatives sur le comportement de l'attaquant, ou tout simplement de ne faire aucune hypothèse. Dans ce dernier cas de figure, on peut considérer pour évaluer la métrique de sécurité propagée une moyenne prise sur tous les chemins reliant le point d'accès au nœud considéré.

Comme mentionné précédemment, la modélisation proposée par l'invention permet avantageusement de tenir compte d'une évolution dans le temps non seulement de la topologie du système d'information mais également des vulnérabilités susceptibles d'affecter les éléments de ce système. Ainsi, dans un mode particulier de réalisation, au moins une probabilité d'occurrence d'une vulnérabilité d'un nœud du graphe et/ou une métrique d'accessibilité associée à un arc du graphe peuvent varier dans le temps, conduisant à des états distincts du système d'information.

Pour bien visualiser l'impact sur la sécurité du système d'information de ces possibles évolutions, une métrique de sécurité globale peut être déterminée lors de l'étape de détermination pour chacun d'une pluralité d'instants prédéterminés correspondant à différents états du système d'information.

Ces intervalles de temps sont typiquement choisis de sorte à refléter les évolutions vécues par le système d'information, chaque intervalle correspondant à une évolution d'au moins un des paramètres précités (probabilité d'occurrence ou métrique d'accessibilité).

Pour modéliser ou prédire les variations dans le temps de ces paramètres, divers modèles peuvent être adoptés.

Ainsi, par exemple, dans un mode particulier de réalisation, la probabilité d'occurrence de la vulnérabilité d'un nœud n varie dans le temps selon une fonction $f_n$ telle que :

$$f_n(t) = 1 - (1 - p_n)^{\alpha_n t}$$

où t désigne le temps, $p_n$ la probabilité d'occurrence de la vulnérabilité du nœud n pour un état déterminé du système d'information et $\alpha_n$ est un paramètre compris entre 0 et 1 et défini pour le nœud n.

Cette fonction $f_n$ converge vers 1 lorsque le temps t tend vers l'infini. Elle reflète avantageusement le fait que plus un attaquant dispose de temps, plus il est probable qu'il exploite une vulnérabilité.

Dans un autre mode de réalisation, la métrique d'accessibilité d'un arc reliant un nœud n1 à un nœud n2 varie dans le temps selon une fonction $g_{n1,n2}$ telle que :

$$g_{n1,n2}(t) = a_{n1,n2} + \left(1 - a_{n1,n2}\right)\frac{\beta(t-1)}{t}$$

où t désigne le temps, $a_{n1,n2}$ la métrique d'accessibilité de l'arc reliant le nœud n1 au nœud n2 pour un état du système d'information déterminé, et $\beta$ est un paramètre compris entre 0 et 1.

Bien entendu, le choix de la fonction $g_{n1,n2}$ dépend du système d'information, et cet exemple n'est donné qu'à titre illustratif : il correspondant à une situation où les connexions entre les éléments du système d'information sont de plus en plus fréquentes au fil de la journée.

Dans un autre mode de réalisation, pour prédire l'évolution des métriques d'accessibilité, plutôt que d'utiliser une fonction dépendant du temps telle que la fonction $g_{n1,n2}$ mentionnée ci-dessus, la métrique d'accessibilité d'un arc reliant un nœud n1 à un nœud n2 à un instant t est prédite en utilisant un historique des métriques d'accessibilité observées entre les mêmes nœuds à des instants passés espacés d'une même période T. Par exemple, la métrique d'accessibilité de l'arc reliant le nœud n1 au nœud n2 à l'instant t peut être prédite au moyen d'une combinaison linéaire de métriques d'accessibilité observées entre les mêmes nœuds à des instants précédents espacés d'une même période T. Plus précisément, la valeur de la métrique d'accessibilité $a_{n1,n2}(t, T_n)$ à l'instant t (modulo T) correspondant à la n-ième période T (notée $T_n$), peut être prédite en utilisant une combinaison linéaire des valeurs des métriques d'accessibilité $a_{n1,n2}(t, T_{n-j})$, j=0,...,n-1 observées à l'instant t et correspondant aux j-ièmes périodes T (i.e. $T_0, T_1,..., T_{n-1}$). Un exemple

d'une telle fonction linéaire est :

$$a_{n1,n2}\ (t, T_n) = \alpha\ a_{n1,n2}\ (t, T_{n-1})\ +\ (1\ -\ \alpha) a_{n1,n2}\ (t, T_{n-2})\ avec\ \alpha\ \in [0,1].$$

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en œuvre dans un dispositif de surveillance ou plus généralement dans un ordinateur, ce programme comportant des instructions adaptées à la mise en œuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communications comprenant :

- un système d'information comprenant une pluralité d'éléments et au moins un point d'accès à ces éléments ; et
- un dispositif de surveillance de la sécurité du système d'information conforme à l'invention.

Le système de communications bénéficie des mêmes avantages que le procédé et le dispositif de surveillance selon l'invention.

On peut également envisager, dans d'autres modes de réalisation, que le procédé de surveillance, le dispositif de surveillance et le système de communications selon l'invention présentent en combinaison tout ou partie des caractéristiques précitées.

Brève description des dessins et annexe

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un système de communications conforme à l'invention, dans un mode particulier de réalisation, le système de communications comprenant un système d'information et un dispositif de surveillance de la sécurité du système d'information conforme à l'invention ;
- la figure 2 représente l'architecture matérielle du dispositif de surveillance de la figure 1, dans un mode particulier de réalisation ;
- la figure 3 représente, sous forme d'ordinogramme, les principales étapes d'un procédé de surveillance selon l'invention, dans un mode particulier de réalisation ;
- la figure 4 illustre les principales étapes mises en œuvre pour construire un graphe modélisant le système d'information de la figure 1 ;
- les figures 5A-5D illustrent des exemples de graphes modélisant conformément à l'invention le système d'information de la figure 1 dans différents états ;
- les figures 6A-6D illustrent les différentes métriques considérées lors du procédé de surveillance selon l'invention.

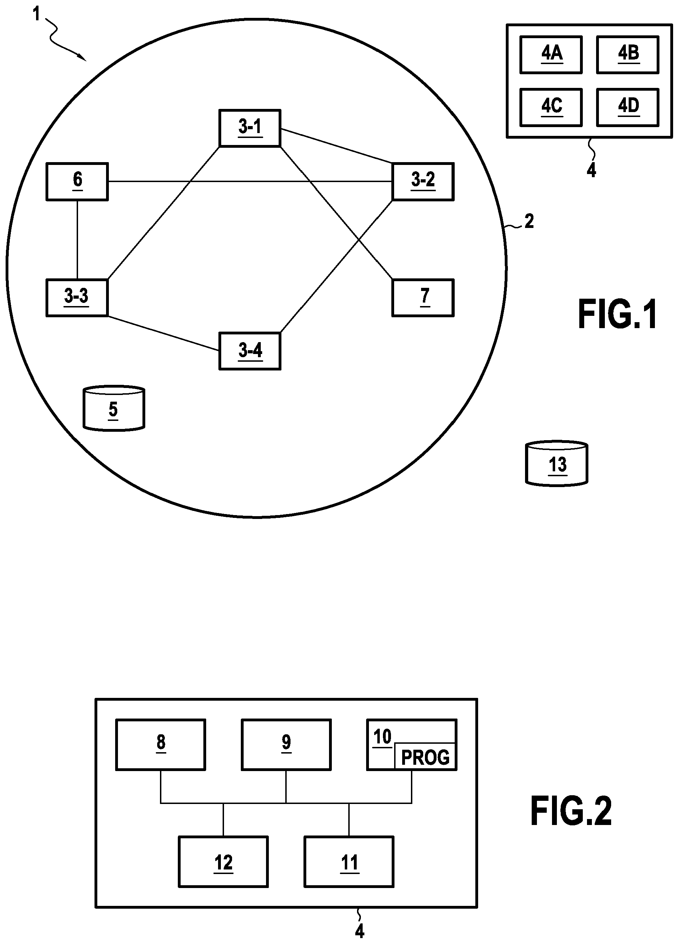

Par ailleurs, l'annexe 1 fournit un exemple de fichier XML générique pouvant être utilisé dans l'invention pour spécifier la topologie du système d'information de la figure 1.

Description détaillée de l'invention

La **figure 1** représente, dans son environnement, un système de communications 1 conforme à l'invention, dans un mode particulier de réalisation.

Le système de communications 1 comprend :

- un système d'information 2, comprenant, dans un état initial, une pluralité d'éléments (i.e. de biens) 3 matériels et/ou virtuels, chaque élément assurant une fonction ou un service donné (ex. calcul, routage, stockage) dans le système d'information 2 ; et
- un dispositif 4 de surveillance de la sécurité du système d'information 2, conforme à l'invention.

Aucune limitation n'est attachée à la nature des éléments du système d'information 2. Comme mentionné précédemment, il peut s'agir de biens matériels tels que par exemple un serveur, une base de données, un terminal, un routeur, etc., ou de biens virtuels, tels que par exemple une machine virtuelle, un service applicatif, ou encore une fonction réseau virtualisée.

Pour mieux illustrer l'invention, on considère ici à titre d'exemple un système d'information 2 permettant de gérer la messagerie électronique d'une entreprise et comprenant, dans son état initial, quatre éléments reliés entre eux, à savoir :

- un serveur Apache 3-1 ;
- un serveur IMAP 3-2 (Internet Message Access Protocol) ;
- un serveur OWA 3-3 (Outlook Web Access) ; et
- un serveur Exchange 3-4.

Les différents éléments du système d'information 2 ainsi que les liens existant entre ces différents éléments constituent la topologie du système d'information 2 dans l'état considéré. Cette topologie est spécifiée par l'administrateur du système d'information 2 et stockée ici dans une base topologique 5. On suppose ici que la désignation des éléments du système d'information 2 dans la base topologique 5 est conforme au standard de nommage CPE (Common Platform Enumeration), connu en soi. Ce standard permet avantageusement de désigner de façon non ambiguë des composants informatiques tels que par exemple un serveur, un système d'exploitation, un logiciel, etc., afin de faciliter notamment l'interfaçage entre les outils qui manipulent les désignations de machines.

Ainsi, par exemple, le nom CPE correspondant est, dans la base topologique 5 :

- pour le serveur Apache 3-1 : cpe:/a:apache:http_server:2.0 ;
- pour le serveur IMAP 3-2 : cpe:/a:cmu:cyrus_imap_server:2.0.17 ;
- pour le serveur OWA 3-3 : cpe:/a :microsoft : outlook :2007 ; et
- pour le serveur Exchange 3-4 : cpe:/a :microsoft :exchange_server :2010.

Bien entendu, un autre standard de nommage peut être adopté pour désigner les éléments du système d'information 2 dans la topologie.

On fait l'hypothèse par ailleurs, dans l'exemple illustré à la figure 1, que les éléments du système d'information 2 sont accessibles via deux points d'accès distincts, à savoir :

- via un terminal 6 (ex. ordinateur) d'un utilisateur de l'intranet de l'entreprise, relié au serveur IMAP 3-2 et au serveur OWA 3-3 ; et
- via un terminal 7 (ex. ordinateur) d'un utilisateur internet, relié au serveur Apache 3-1.

Bien entendu cet exemple n'est donné qu'à titre illustratif et d'autres configurations de systèmes d'information et d'accès à ces systèmes peuvent être envisagées.

On note que l'état du système d'information 2, et notamment sa topologie ou ses points d'accès, peuvent être amenés à évoluer dans le temps. Par exemple, des éléments peuvent être ajoutés et/ou retirés, subir des mises à jours, les paramètres caractérisant ces éléments peuvent évoluer, etc. Les évolutions relatives à la topologie du système d'information sont renseignées dans le mode de réalisation décrit ici par l'administrateur du système d'information 2, directement dans la base topologique 5.

Dans le mode de réalisation décrit ici, le dispositif 4 de surveillance de la sécurité du système d'information 2 a l'architecture matérielle d'un ordinateur, telle que représentée à la **figure 2.** Il comprend notamment un processeur 8, une mémoire vive 9, une mémoire morte 10, une mémoire flash non volatile 11 ainsi que des moyens de communication 12 lui permettant de communiquer notamment sur le réseau d'entreprise, sur le réseau Internet et avec la base de données 5. Ces moyens de communication 12 comprennent par exemple une carte réseau, bien connue en soi.

La mémoire morte 10 du terminal constitue un support d'enregistrement conforme à l'invention, lisible par le processeur 8 et sur lequel est enregistré ici un programme d'ordinateur PROG conforme à l'invention.

Le programme d'ordinateur PROG définit des modules fonctionnels et logiciels ici, configurés pour mettre en œuvre les étapes du procédé de surveillance de la sécurité d'un système d'information selon l'invention. Ces modules fonctionnels s'appuient sur et/ou commandent les éléments matériels 8-12 du dispositif de surveillance 4 cités précédemment. Ils comprennent notamment ici, comme illustré sur la figure 1 :

- un module 4A de modélisation, configuré pour modéliser le système d'information 2 dans au moins un état au moyen d'un graphe G conformément à l'invention. La façon dont le graphe G est défini et construit par le module 4A est décrite plus en détail ultérieurement ;
- un module 4B d'évaluation, configuré pour évaluer pour chaque nœud d'un ensemble de nœuds du graphe identifiés comme critiques, une métrique de sécurité du nœud. La façon dont ces métriques de sécurité des nœuds de l'ensemble de nœuds critiques sont évaluées par le module 4B est décrite également plus en détail ultérieurement ; et
- un module 4C de détermination, configuré pour déterminer une métrique de sécurité globale du système d'information 2 en cumulant les métriques de sécurité évaluées des nœuds de l'ensemble de nœuds critiques du graphe.

Les modules 4A, 4B et 4C peuvent être activés pour différents états du système d'information ou différents instants susceptibles de correspondre à différents états du système d'information ou différents états de paramètres susceptibles d'affecter la sécurité du système d'information. Il en résulte une pluralité de graphes modélisant le système d'information dans chacun des états considérés ou à chaque instant considéré, ainsi qu'une pluralité de métriques de sécurité globales déterminées pour ces différents états et/ou instants.

Le programme d'ordinateur PROG définit également un module 4D de surveillance de la sécurité du système d'information 2 configuré pour utiliser les métriques de sécurité globales du système d'information 2 ainsi déterminées.

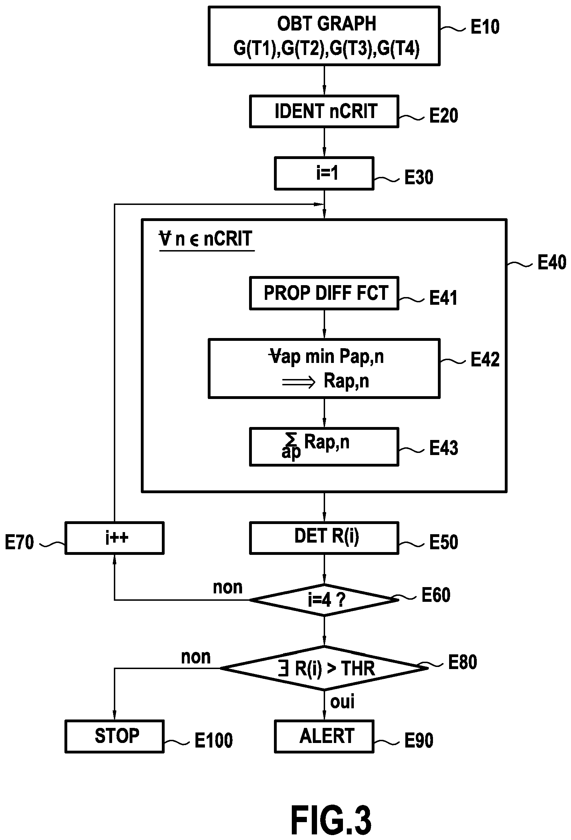

Les fonctions de ces différents modules sont décrites plus en détail maintenant, en référence à la **figure 3** et aux étapes du procédé de surveillance selon l'invention, telles qu'elles sont mises en œuvre, dans un mode particulier de réalisation par le dispositif 4 de surveillance, pour surveiller la sécurité du système d'information 2.

Conformément à l'invention, le dispositif 4 de surveillance assure la surveillance de la sécurité du système d'information 2 en s'appuyant sur une modélisation sous forme d'un graphe G (ou de plusieurs graphes établis à des instants distincts traduisant une évolution de l'état du système d'information) de ce système d'information sur une période de temps T prédéterminée, définie par exemple par l'administrateur du système d'information (étape E10).

Conformément à l'invention, pour construire ce (ou ces) graphe(s), le module 4A de modélisation du dispositif de surveillance 4 utilise diverses informations, à savoir :

- des informations sur la topologie courante du système d'information 2, extraites de la base topologique 5 ;
- des informations sur les différents points d'accès existant aux éléments du système d'information 2 (et qui ont un impact à proprement parler sur l'état du système d'information) ; et
- des informations relatives aux vulnérabilités susceptibles d'affecter les éléments du système d'information 2. Ces informations sont extraites ici d'une base de données 13 dite base des vulnérabilités telle que par exemple la base de données NVD (pour « National Vulnerability Database ») maintenue par le gouvernement américain et disponible sur le site https://nvd.nist.gov/. De façon connue, cette base NVD fournit une liste des vulnérabilités répertoriées susceptibles d'affecter la sécurité des systèmes d'information et les différents éléments les composant. Les vulnérabilités sont décrites dans cette base conformément au standard CVE (pour « Common Vulnerabilities and Exposures »). La base NVD quantifie par ailleurs le risque associé à chacune des vulnérabilités répertoriées. Ce risque est quantifié via la provision pour chaque vulnérabilité associée à un élément d'un système d'information d'un premier score représentatif d'une probabilité d'occurrence de la vulnérabilité et d'un second score représentatif de l'impact (i.e. degré de conséquence) sur l'élément de l'exploitation de cette vulnérabilité. Ces scores sont évalués conformément au système CVSS (« Common Vulnerability Scoring System »). On note que l'impact d'une vulnérabilité est une grandeur sans unité, variant entre 0 et 10. Sa valeur dépend de trois facteurs selon le système CVSS, à savoir de l'impact de la vulnérabilité sur la confidentialité, de l'impact de la vulnérabilité sur la disponibilité de l'élément et de l'impact de la vulnérabilité sur l'intégrité.

La **table 1** ci-dessous illustre des informations qui peuvent être extraites de la base NVD pour les 4 éléments 3-1, 3-2, 3-3 et 3-4 du système d'information 2 illustré à la figure 1. On note que dans la base NVD, une description succincte de chaque vulnérabilité (omise dans la table 1) est par ailleurs fournie.

Table 1 : Correspondance entre les vulnérabilités de la base NVD 13 et les éléments du système d'information 2

| Elément | Vulnérabilités | Probability d'occurrence p | Impact I |
|---|---|---|---|
| Serveur Apache 3-1 | v1 | 0.5 | 2.9 |
| | v2 | 0.5 | 2.9 |
| Serveur IMAP 3-2 | v3 | 0.5 | 6.4 |
| Serveur OWA 3-3 | v4 | 0.43 | 10 |
| Serveur Exchange 3-4 | v5 | 0.5 | 2.9 |

Dans le mode de réalisation décrit ici, la base topologique 5 et la base des vulnérabilités 13 sont scannées (i.e. interrogées) de façon périodique ou prédéterminée par le dispositif de surveillance 4 pour détecter tout changement dans ces bases impactant le système d'information 2 et sa sécurité. En effet, un changement dans l'une de ces bases est susceptible d'induire une évolution du système d'information vers un nouvel état ou une évolution des métriques de sécurité qui sont calculées pour surveiller la sécurité du système d'information (ex. connaissance de nouvelles vulnérabilités susceptibles d'affecter la sécurité du système d'information).

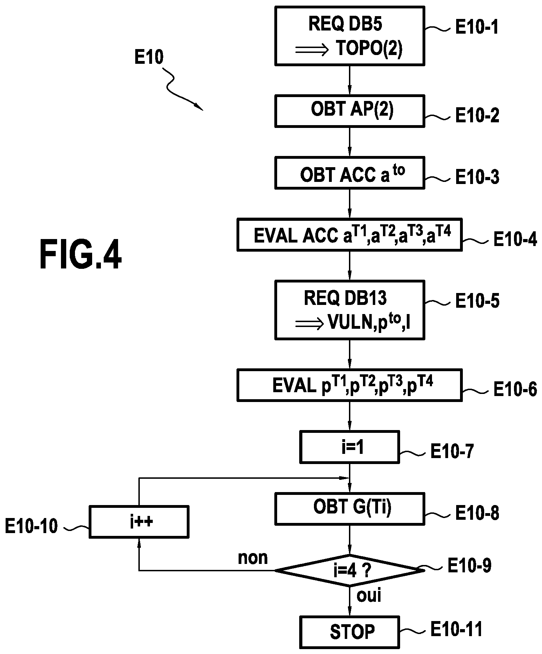

La **figure 4** représente plus en détail les différentes étapes mises en œuvre par le module de modélisation 4A pour construire lors de l'étape E10 le ou les graphes modélisant le système d'information 2 à partir des informations précitées.

On note que pour tenir compte de l'évolution temporelle du système d'information 2 (ex. topologie, fréquence de connexion de ses éléments, etc.) ou des paramètres susceptibles d'affecter sa sécurité (ex. vulnérabilités), le module de modélisation 4A construit plusieurs graphes modélisant le système d'information potentiellement dans différents états, et correspondant à différents instants de la période de temps T. Il procède alors pour chaque graphe de la même manière, et comme illustré à la figure 4. Les instants considérés peuvent être prédéterminés ou choisis de façon périodique, en fonction par exemple de la connaissance du système d'information 2 et de son évolution possible, de sorte à traquer les évolutions des paramètres précités (état du système, vulnérabilités, etc.). A titre illustratif, on envisage ici quatre instants prédéterminés définis dans la période de temps T spécifiée par l'administrateur du système d'information 2, à savoir Tl=ls, T2=2s, T3=3s et T4=4s. Par souci de simplification, on fait l'hypothèse ici que la topologie à proprement parler du système d'information 2 n'évolue pas durant la période de temps T, ni les vulnérabilités connues susceptibles d'affecter ses éléments. On se limite ici à une évolution d'autres paramètres du système d'information 2 à ces différents instants spécifiés conduisant à plusieurs états distincts du système d'information 2, comme mentionné plus en détail ultérieurement. Toutefois cette hypothèse n'est pas limitative en soi, et l'invention permet de tenir compte d'évolution de la topologie ou des vulnérabilités également.

Le module de modélisation 4A construit donc ici quatre graphes G(T1), G(T2), G(T3) et G(T4) (regroupés sous l'appellation générale G lorsque la distinction entre ces graphes importe peu et que des étapes sont appliquées indifféremment à chaque graphe), correspondant respectivement aux quatre instants T1, T2, T3 et T4 précédemment spécifiés. Ces quatre graphes correspondent à quatre états distincts du système d'information au sens de l'invention.

Plus précisément, au cours de l'étape de modélisation E10, le module de modélisation 4A du dispositif de surveillance 4 accède dans un premier temps à la base topologique 5 (étape E10-1) afin d'extraire de celle-ci la topologie du système d'information 2, autrement dit, les éléments du système d'information ainsi que les liens de connexion existant entre ces éléments. Dans le mode de réalisation décrit ici, la topologie du système d'information 2 est remontée de la base topologique 5 au module de modélisation 4A dans un fichier XML (eXtensible Markup Language) comprenant différents attributs organisés comme illustré par exemple en **Annexe 1.**

Dans ce fichier XML, l'attribut « topologie » représente la topologie du système d'information considéré (ici le système d'information 2), l'attribut « lien » représente les liens du système, chaque lien reliant deux éléments « element_1 » et « element_2 » dont le nom est spécifié ici avec le standard CPE (« nom_cpe »).

En outre, une fréquence de connexion pour chaque lien, désignée par « a », est fournie via l'attribut « accessibilité ». Cette fréquence de connexion traduit l'accessibilité des éléments du système d'information. Plus particulièrement, elle mesure, pour un lien reliant un élément E1 à un élément E2 du système d'information 2, la fréquence à laquelle ce lien du système d'information 2 est sollicité (utilisé), autrement dit encore, la fréquence à laquelle l'élément E1 accède à l'élément E2 et/ou inversement. Lorsque cette fréquence est égale à 1, cela signifie que les éléments E1 et E2 sont connectés en permanence l'un à l'autre, autrement dit, sont accessibles l'un depuis l'autre en permanence. Lorsque cette fréquence est égale à 0.5, cela signifie que ces deux éléments sont connectés 50% du temps, etc.

Cette fréquence de connexion est renseignée dans la base topologique 5 pour un état donné du système d'information 2 (ex. état initial à l'instant $t_0$) par l'administrateur du système d'information 2 en fonction par exemple d'un historique d'accessibilité passée recueilli par celui-ci. On note que cette fréquence de connexion peut être amenée à évoluer dans le temps, auquel cas, soit cette évolution peut être renseignée directement dans la base topologique 5 par l'administrateur du système d'information 2 pour les différents instants T1, T2, T3 et T4, puis ensuite remontée au module de modélisation 4A, soit elle peut être prédite par le module de modélisation 4A comme indiqué ultérieurement.

Dans l'exemple illustré à la figure 1, le module de modélisation 4A est donc informé lors de cette étape que le système d'information 2 comprend 4 éléments 3-1, 3-2, 3-3 et 3-4 et que parmi ces éléments, l'élément 3-1 est relié à l'élément 3-2 et à l'élément 3-3, et les éléments 3-2 et 3-3 sont reliés à l'élément 3-4.

Le module de modélisation 4A identifie par ailleurs les points d'accès aux éléments du système d'information 2, ainsi que les liens de connexions existant entre ces points d'accès et les éléments du système d'information (étape E10-2). Ces informations peuvent être renseignées dans la base topologique 5 par l'administrateur du système d'information 2, ou être obtenue d'une autre base de données également renseignée et mise à jour par celui-ci. Elles font partie des informations susceptibles d'impacter l'état du système d'information.

Dans l'exemple illustré à la figure 1, le module de modélisation 4A identifie lors de l'étape E10-2 les deux points d'accès 6 et 7, reliés respectivement aux éléments 3-2 et 3-3, et aux éléments 3-1.

Suite à l'obtention de la topologie du système d'information 2 lors de l'étape E10-1, le module de modélisation 4A extrait du fichier XML pour chaque lien de connexion existant dans le système d'information 2, la fréquence de connexion sur ces liens (étape E10-3). Cette fréquence de connexion constitue une métrique d'accessibilité au lien au sens de l'invention correspondant à un état initial $t_0$ du système d'information 2.

A titre d'exemple ici, on suppose que le module de modélisation 4A extrait pour tous les liens les mêmes valeurs de fréquences de connexion, à savoir $a^{t_0}=0.2$, y compris pour les liens reliant les points d'accès aux éléments concernés du système d'information 2.

Puis, dans le mode de réalisation décrit ici, il évalue (i.e. prédit) pour les différents instants T1, T2, T3 et T4 spécifiés, les valeurs de cette fréquence de connexion, notées respectivement $a^{T1}, a^{T2}, a^{T3}$ et $a^{T4}$ (étape E10-4).

A cet effet ici, le module de modélisation 4A utilise pour modéliser les variations dans le temps de la fréquence de connexion $a^t_{E1,E2}$ sur un lien entre deux éléments E1 et E2 la fonction g définie par :

$$a^t_{E1,E2} = g_{E1,E2}(t) = a^{t_0}_{E1,E2} + \left(1 - a^{t_0}_{E1,E2}\right)\frac{\beta(t-1)}{t}$$

où t désigne le temps, $a^{t_0}_{E1,E2}$ la fréquence de connexion sur le lien entre les éléments E1 et E2 pour l'état initial du système d'information 2 à l'instant $t_0$, et $\beta$ est un paramètre de convergence compris entre 0 et 1. Autrement dit, la fonction considérée ici correspond au cas où les fréquences de connexion sont croissantes en fonction du temps (par exemple au cours d'une journée), et le paramètre $\beta$ permet de contrôler la convergence de la fréquence vers 1.

Bien entendu, cette fonction n'est donnée qu'à titre illustratif et d'autres fonctions g traduisant l'évolution de la fréquence de connexion d'un lien en fonction du temps peuvent être envisagées. Ces fonctions peuvent être déterminées via des méthodes statistiques ou probabilistes par exemple. De même, des fonctions g distinctes pour des liens distincts peuvent être envisagées.

Dans un autre mode de réalisation, pour prédire l'évolution des fréquences de connexion, plutôt que d'utiliser une fonction dépendant du temps telle que la fonction $g_{E1,E2}$ mentionnée ci-dessus, la fréquence de connexion entre deux éléments E1 et E2 à un instant t est prédite en utilisant un historique des fréquences de connexion observées entre les mêmes éléments à des instants passés espacés d'une même période T. Par exemple, la valeur de la métrique d'accessibilité $a^t_{E1,E2}(T_n)$ à l'instant t (modulo T) correspondant à la n-ième période T (notée $T_n$), peut être prédite en utilisant une combinaison linéaire des valeurs des métriques d'accessibilité $a^t_{E1,E2}(T_{n-j})$ , j=0,...,n-1 observées à l'instant t et correspondant aux j-ièmes périodes T (i.e. $T_0, T_1,...,T_{n-1}$). Un exemple d'une telle fonction linéaire est :

$$a^t_{E1,E2}(T_n) = \alpha\, a^t_{E1,E2}(T_{n-1}) + (1 - \alpha)a^t_{E1,E2}(T_{n-2})\ \ avec\ \alpha \in [0,1].$$

En appliquant cette fonction à la valeur $a^{t_0}=0.2$ (commune ici à tous les liens E1-E2 existants dans le système d'information 2, d'où l'omission des indices E1-E2) avec $\beta = 1$, le module de modélisation 4A obtient les valeurs de fréquence de connexion suivantes :

- pour l'instant T1=1, la fréquence de connexion sur les liens est $a^{T1}=0.2$ ;

- pour l'instant T2=2, la fréquence de connexion sur les liens est $a^{T2}$=0.6 ;
- pour l'instant T3=3, la fréquence de connexion sur les liens est $a^{T3}$=0.73 ; et
- pour l'instant T4=4, la fréquence de connexion sur les liens est $a^{T4}$=0.8.

On note que la fréquence de connexion est comprise ici entre 0 et 1.

Le module de modélisation 4A accède ensuite à la base des vulnérabilités 13 et identifie, pour chaque élément du système d'information 2, les vulnérabilités susceptibles de l'affecter (étape E10-5). Dans l'exemple envisagé à la figure 1, comme indiqué dans la table 1, le module de modélisation 4A identifie deux vulnérabilités v1 et v2 pour le serveur 3-1, une vulnérabilité v3 pour le serveur 3-2, une vulnérabilité v4 pour le serveur 3-3 et une vulnérabilité v5 pour le serveur 3-4.

Le module de modélisation 4A extrait également de la base des vulnérabilités 13, pour chaque vulnérabilité identifiée pour un élément du système d'information 2, sa probabilité d'occurrence p, et son impact I sur l'élément (cf. table 1 pour les éléments 3-1 à 3-4 du système d'information 2).

Dans le mode de réalisation décrit ici, la probabilité d'occurrence p renseignée dans la base des vulnérabilités 13 correspond à l'état initial à l'instant $t_0$ du système d'information, et varie dans le temps. Le module de modélisation 4A prédit pour les différents intervalles de temps T1, T2, T3 et T4, les valeurs de la probabilité d'occurrence de chaque vulnérabilité notées respectivement $p^{T1}, p^{T2}, p^{T3}$ et $p^{T4}$ (étape E10-6).

A cet effet, il utilise, pour modéliser les variations dans le temps de la probabilité d'occurrence d'une vulnérabilité donnée $p^t$ la fonction f définie pour cette vulnérabilité par :

$$p^t = f(t) = 1 - (1 - p^{t_0})^{\alpha \ t}$$

où t désigne le temps, $p^{t_0}$ la probabilité d'occurrence de la vulnérabilité considérée pour l'état initial $t_0$ du système d'information 2 et $\alpha$ est un paramètre compris entre 0 et 1 choisi pour ladite vulnérabilité.

Bien entendu cette fonction n'est donnée qu'à titre illustratif et d'autres fonctions f traduisant l'évolution de la probabilité d'occurrence d'une vulnérabilité affectant un élément. Ces fonctions peuvent être déterminées via des méthodes statistiques ou probabilistes par exemple.

On note que dans le mode de réalisation décrit ici, l'impact de chaque vulnérabilité est supposé constant.

L'évolution temporelle de la métrique d'accessibilité et des probabilités d'occurrence reflète des états différents du système d'information 2, que l'invention propose de prendre en compte lors de la surveillance de la sécurité du système d'information en construisant un graphe pour chaque état distinct.

Suite à l'accomplissement des étapes préliminaires E10-1 à E10-6, le module de modélisation 4A construit donc à partir des informations recueillies un graphe G distinct pour chaque instant T1-T4 (i.e. chaque état du système d'information 2) (étape d'initialisation E10-7, étape test E10-9, étape d'incrémentation E10-10, et étape de construction E18). Autrement dit, il construit ici 4 graphes G(T1), G(T2), G(T3), G(T4) correspondant respectivement aux 4 états distincts du système d'information résultant de l'évolution temporelle de la probabilité d'occurrence des vulnérabilités et de la métrique d'accessibilité.

Chaque graphe G(Ti) construit pour un instant Ti, i=1,...,4 ici, comprend une pluralité de nœuds, chaque nœud correspondant à un couple formé d'un élément et d'une vulnérabilité susceptible de l'endommager identifiée à l'étape E15. Autrement dit, le graphe G(Ti) comprend, dans l'exemple illustré à la figure 1, cinq nœuds n1-n5 correspondant respectivement aux couples d'éléments n1=(3-1,v1), n2=(3-1,v2), n3=(3-2,v3), n4=(3-3,v4) et n5=(3-4,v5).

Chaque nœud n est associé dans le graphe G(Ti) à la probabilité d'occurrence $p_n$ de la vulnérabilité de ce nœud pour l'intervalle de temps Ti, et à son impact $I_n$.

Par ailleurs, dans le graphe G(Ti) construit par le module de modélisation 4A, deux nœuds A et B sont reliés par un arc :

- bidirectionnel, si lesdits nœuds correspondent au même élément ;
- orienté du nœud A vers le nœud B, si l'exploitation de la vulnérabilité du nœud A lors d'une attaque depuis un point d'accès entraine l'exploitation de la vulnérabilité du nœud B.

Dans l'exemple illustré à la figure 1, le graphe G(Ti) comprend les arcs suivants :

- un arc bidirectionnel entre les nœuds n1 et n2 ;
- un arc orienté de n1 vers n3 et un arc orienté de n1 vers n4 ;
- un arc orienté de n2 vers n3 et un arc orienté de n2 vers n4 ;
- un arc orienté de n3 vers n5 ; et
- un arc orienté de n4 vers n5.

Un arc est orienté d'un nœud ni vers un nœud nj lorsque l'élément du système d'information associé au nœud ni peut se connecter à l'élément du système d'information associé au nœud nj (ces deux éléments étant susceptibles d'être affectés par au moins une vulnérabilité).

Le module de modélisation 4A inclut également comme nœuds dans le graphe G(Ti) les deux points d'accès 6 et 7 au système d'information, ainsi que leurs liens avec les éléments du système d'information 2. Ces deux points d'accès correspondent respectivement aux nœuds n6 et n7. Chaque point d'accès est relié par un arc orienté aux nœuds correspondants aux éléments auxquels il est connecté dans le système d'information 2. L'arc est orienté du point d'accès vers le nœud correspondant à l'élément auquel le point d'accès est relié dans le système d'information 2, pour traduire le sens de propagation d'une éventuelle attaque menée depuis ce point d'accès. Ainsi, dans l'exemple illustré à la figure 1 :

- le nœud n6 est relié au nœud n3 par un arc orienté de n6 vers n3, et au nœud n4 par un arc orienté de n6 vers n4 ; et
- le nœud n7 est relié au nœud n1 par un arc orienté de n7 vers n1, et au nœud n2 par un arc orienté de n7 vers n2.

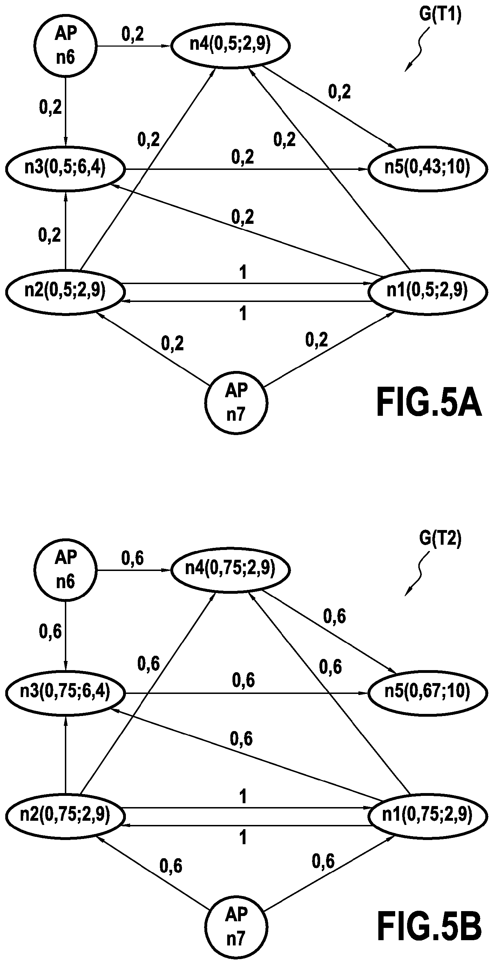

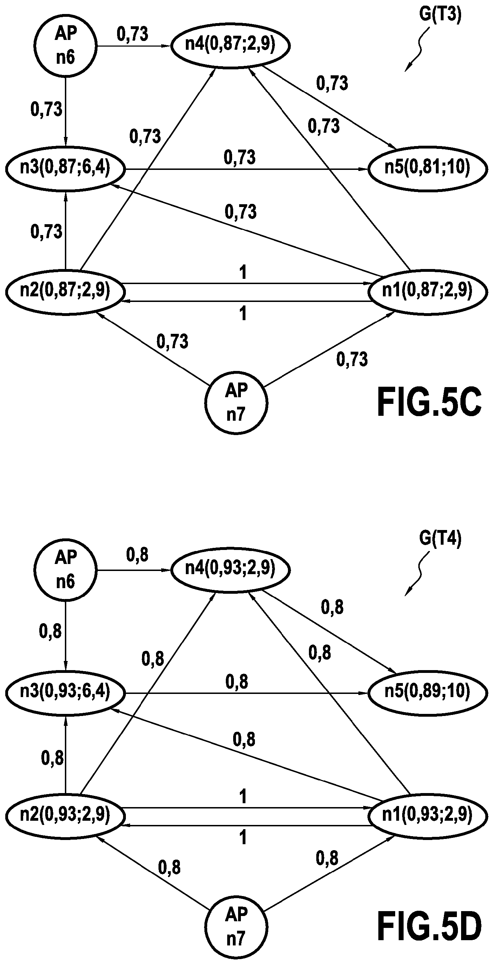

La **figure 5A** illustre le graphe G(T1) construit par le module de modélisation 4A à l'étape E10-8 et modélisant le système d'information 2 à l'instant T1. Les valeurs reportées sur le graphe entre parenthèses pour chaque nœud correspondent à la probabilité d'occurrence et à l'impact de la vulnérabilité associée à ce nœud à l'instant T1.

A l'issue de la construction du graphe G(Ti), le module de modélisation 4A associe à chaque arc orienté une métrique d'accessibilité mesurant la fréquence de connexion $a^{Ti}$ dans le système d'information entre les éléments des nœuds reliés par cet arc pour l'instant Ti considéré. Les fréquences de connexion ont été obtenues ou prédites lors des étapes E10-3 et E10-4 précédentes. Autrement dit, si on note $a^t_{n1,n2}$ la métrique d'accessibilité à l'instant t associée par le module de modélisation 4A à l'arc reliant un nœud n1 correspondant à un élément E1 à un nœud n2 correspondant à un élément E2 on a :

$$a^t_{n1,n2} = a^t_{E1,E2} \text{ si } E_1 \neq E_2$$

et

$$a^t_{n1,n2} = 1 \text{ si E1 identique à E2.}$$

En effet, un bien est considéré comme étant toujours accessible à partir de lui-même. A titre illustratif, les métriques d'accessibilité sont reportées sur chaque arc sur la figure 5A.

Comme mentionné précédemment, un graphe distinct G(Ti) est construit pour chaque instant spécifié. Les **figures 5B à 5D** illustrent ces graphes pour les instants T2, T3 et T4 respectivement. L'étape de construction de modélisation du système d'information 2 est alors achevée (étape E10-11), et les graphes GT(i), i=1,...,4 sont stockés par exemple dans la mémoire non volatile 11 du dispositif de surveillance 4, en association avec les instants Ti, i=1,...,4 correspondants. Il est possible, à ce stade de visualiser, par exemple via une interface graphique prévue à cet effet, les graphes ainsi construits correspondant aux différents états modélisés du système d'information.

Comme mentionné précédemment, dans l'exemple illustré à la figure 1, les nœuds des graphes ainsi que les arcs (bidirectionnels et orientés) ne changent pas au cours du temps, car on suppose ici que la topologie à proprement parler du système d'information 2 n'a pas évolué sur les quatre instants T1 à T4. Seules les valeurs des métriques d'accessibilité et des probabilités d'occurrence ont évolué ici pour les différentes périodes de temps considérées T1 à T4.

Cette hypothèse n'est toutefois pas limitative. En effet, l'invention permet de s'accommoder également aisément d'une évolution de la topologie du système d'information 2, par exemple via l'ajout ou la suppression d'un élément du système d'information, l'ajout ou la suppression d'un lien entre les éléments du système d'information ou d'un nouveau point d'accès, ou encore l'apparition de nouvelles vulnérabilités. Dans ce cas, un nouveau graphe est généré de manière identique à ce qui a été décrit précédemment pour les graphes G(T1), G(T2), G(T3) et G(T4), dès lors qu'une telle évolution a été détectée, par exemple au niveau de la base de topologie 5 ou de la base de vulnérabilités 13. On note que le nouveau graphe peut consister en une simple mise à jour d'un graphe précédemment construit. Les changements opérés dans les bases 5 et/ou 13 (résultant en la mise à jour des graphes), peuvent être détectés en accédant à ces bases par exemple de façon périodique ou de façon prédéterminée. En corollaire, on peut envisager une mise à jour des graphes construits à partir des informations extraites de ces graphes de façon périodique ou de façon prédéterminée.

Une fois les graphes G(Ti), i=1,...,4, construits, le module d'évaluation 4B évalue, pour chaque instant Ti et chaque état du graphe en résultant, i=1,..,4 (étapes d'initialisation E30, de test E60 et d'incrémentation E70), une métrique de sécurité globale R(i) à partir de chaque graphe G(Ti).

A cet effet, le module d'évaluation 4B identifie (i.e. détermine) tout d'abord les nœuds critiques du graphe du point de vue de la sécurité du système d'information 2 (étape E20). Dans le mode de réalisation décrit ici, le module d'évaluation 4B considère que tous les nœuds du graphe sont critiques. En variante, seul un sous-ensemble nCRIT de nœuds du graphe est considéré comme critique. Différents critères, connus en soi de l'homme du métier, peuvent être considérés par le module d'évaluation 4B pour juger si un nœud est critique ou pas. Par exemple, un nœud peut être considéré comme critique s'il est en bordure d'un système d'information ou en relation directe, au niveau du graphe, avec un point d'accès externe ; selon un autre exemple, un nœud pet être considéré comme critique s'il est connecté à un nombre d'arcs supérieur à un seuil prédéterminé.

Puis il met en œuvre les étapes suivantes de façon identique pour chaque graphe G(Ti), i=1,...,4.

Pour chaque nœud indexé par n du graphe G(Ti) identifié comme critique (i.e. pour chaque nœud du graphe dans le mode de réalisation décrit ici), le module d'évaluation 4B évalue une métrique de sécurité du nœud notée $R_n$ (indice temporel faisant référence à l'intervalle de temps considéré omis) (étape E40). Cette métrique $R_n$ de sécurité du nœud n représente un niveau de risque encouru par l'élément du nœud n d'être affecté par la vulnérabilité de ce nœud lors d'attaques menées contre le système d'information 2 depuis les différents points d'accès (terminaux 6 et 7 dans l'exemple de la figure 1). Elle est évaluée en utilisant l'impact associé à la vulnérabilité du nœud n, ainsi que les probabilités d'occurrence des vulnérabilités des nœuds et les métriques d'accessibilité des arcs d'au moins un chemin du graphe G(Ti) existant entre le nœud n et les différents points d'accès au système d'information 2.

Dans le mode de réalisation décrit ici, pour évaluer cette métrique, on fait une hypothèse du pire cas selon laquelle un attaquant opérant depuis un point d'accès quelconque choisit, parmi plusieurs chemins possibles dans le système d'information 2, le chemin le plus risqué, c'est-à-dire celui qui présente une propagation maximale de l'attaque ou autrement dit encore, un niveau de risque encouru maximal et corrélativement une métrique de sécurité de nœud maximale. Pour tenir compte le cas échéant de l'existence de plusieurs points d'accès dans le système d'information 2, on définit la métrique de sécurité $R_n$ d'un nœud n comme le cumul de métriques de sécurité dites propagées $R_{ap,n}$ évaluées entre le nœud n et chacun des points d'accès ap au système d'information 2. Plus particulièrement ici :

$$R_n = \sum_{ap} R_{ap,n}$$

Chaque métrique de sécurité propagée $R_{ap,n}$ évaluée entre un point d'accès ap et le nœud n se définit comme le risque encouru par un nœud n d'être affecté par la vulnérabilité qui lui est associée lors d'une attaque depuis le point d'accès ap. Cette métrique de sécurité propagée $R_{ap,n}$ est donnée par le produit de l'impact $I_n$ associé à la vulnérabilité du nœud n et d'une métrique dite d'occurrence propagée notée $P_{ap,n}$ calculée entre le point d'accès ap et le nœud n, soit :

$$R_{ap,n} = I_n. P_{ap,n}$$

L'hypothèse de pire cas évoquée précédemment se traduit au niveau du module d'évaluation 4B par la recherche, pour chaque point d'accès ap, d'un chemin dans le graphe G(Ti) reliant ce point d'accès au nœud n et maximisant la métrique de sécurité $R_{ap,n}$, ou autrement dit, maximisant la métrique d'occurrence partagée $P_{ap,n}$. Sur un chemin comprenant k nœuds notés n1,n2,...,ni,n(i+1),...,nk, allant du point d'accès ap=n1 au nœud n=nk, la métrique d'occurrence partagée est définie par :

$$P_{ap,n}(\text{n1}, \text{n2}, ..., \text{n}(i), \text{n}(i+1), ..., \text{Nk}) = \prod_{i=1}^{k} P_{n(i),n(i+1)}$$

où $P_{n(i),n(i+1)}$ désigne une fonction de propagation entre les nœuds n(i) et n(i+1) représentant la facilité pour un attaquant d'exploiter la vulnérabilité affectant un nœud n(i+1) depuis le nœud n(i), et définie par :

$$P_{n(i),n(i+1)} = a_{n(i),n(i+1)}. p_{n(i+1)}$$

où $a_{n(i),n(i+1)}$ désigne la métrique d'accessibilité du lien reliant les deux nœuds n(i) et n(i+1) (indice temporel Ti omis) et $p_{n(i+1)}$ désigne la probabilité d'occurrence de la vulnérabilité du nœud n(i+1).

La dépendance entre les éléments du système d'information modélisée par les arcs reliant certains nœuds du graphe entre eux implique en effet une transitivité dans le système d'information 2 qui permet au risque d'être affecté par des vulnérabilités de se propager : un nœud vulnérable n(i) peut transmettre à un nœud n(i+1) auquel il est relié son risque d'être affecté par une vulnérabilité. Ce risque à son tour se propage aux nœuds reliés au nœud n(i+1), etc. On note que la fréquence d'occurrence d'un nœud traduit quant à elle la facilité pour un attaquant d'exploiter la vulnérabilité d'un nœud directement.

Le problème à résoudre par le module d'évaluation 4B est connu dans la littérature des mathématiques appliquées comme étant un problème du chemin le plus fiable. Dans le mode de réalisation décrit ici, pour résoudre ce problème, les inventeurs ont eu l'idée de se ramener à un problème de plus court chemin, facilement soluble par le module d'évaluation 4B.

Plus précisément, pour déterminer le chemin maximisant la métrique de sécurité propagée $R_{ap,n}$ entre le point d'accès ap et le nœud n, le module d'évaluation 4B associe à chaque arc du graphe GT(i) reliant deux nœuds n1 et n2 une fonction dite de difficulté de propagation dans le graphe (étape E41), définie par :

$$PD_{n1,n2} = -\log(a_{n1,n2}) - \log(p_{n2})$$

On note que la fonction de difficulté de propagation $PD_{n1,n2}$ ainsi définie représente la notion duale (ou symétrique) de la notion de fonction de propagation $P_{n1,n2}$ précédemment définie. Elle permet avantageusement de calculer facilement les métriques de sécurité de chaque nœud, et plus particulièrement de simplifier la recherche du chemin dans le graphe G(Ti) reliant un point d'accès ap au nœud n et maximisant la métrique d'occurrence partagée $P_{ap,n}$, et donc la métrique de sécurité $R_{ap,n}$. En effet, grâce au choix judicieux de cette fonction, la recherche du chemin maximisant la métrique d'occurrence partagée $P_{ap,n}$ se ramène à la recherche du plus court chemin dans le graphe reliant le point d'accès ap au nœud n et minimisant la fonction de difficulté propagée définie par :

$$\sum_{i=1}^{k} PD_{n(i),n(i+1)}$$

où k désigne le nombre de nœuds du chemin, et n(i) et n(i+1) deux nœuds se succédant dans ce chemin. On a donc :

$$P_{ap,n} = min_{\pi(ap,n)} \sum_{i=1}^{k} PD_{n(i),n(i+1)}$$

où $\pi(ap,n)$ désigne l'ensemble des chemins du graphe G(Ti) entre le point d'accès ap et le nœud n de longueur k. Autrement dit, la métrique d'occurrence propagée $P_{ap,n}$ est obtenue en sommant sur chaque nœud du plus court chemin, le logarithme de l'inverse du produit de la métrique d'accessibilité associée à l'arc reliant ce nœud au nœud suivant sur le chemin et de la fréquence d'occurrence de la vulnérabilité du nœud suivant.

Pour identifier le plus court chemin minimisant la métrique d'occurrence partagée entre chaque point d'accès ap et le nœud n, le module d'évaluation 4B utilise ici l'algorithme de Dijkstra, bien connu en soi, qu'il applique au graphe G(Ti) et aux valeurs de la fonction de difficulté de propagation associées aux arcs (étape E42). Bien entendu, d'autres algorithmes peuvent être utilisés en variante.

Si on désigne par $SP_{ap,n}$ la valeur du plus court chemin obtenu par le module d'évaluation 4B en utilisant l'algorithme de Dijkstra entre le point d'accès ap et le nœud n, le module d'évaluation 4B évalue la métrique d'occurrence partagée en appliquant la formule suivante (étape E42) :

$$P_{ap,n} = \frac{1}{\exp(SP_{ap,,n})}$$

Le module d'évaluation 4B évalue ensuite la métrique de sécurité propagée entre le point d'accès ap et le nœud n selon :

$$R_{ap,n} = I_n. P_{ap,n}$$

Puis il en déduit la métrique de sécurité $R_n$ du nœud n en cumulant les métriques de sécurité propagées évaluée entre tous les points d'accès ap au système d'information 2 et le nœud n, soit en évaluant ici (étape E43) :

$$R_n = \sum_{ap} R_{ap,n}$$

Ces étapes sont réitérées pour tous les nœuds n identifiés comme critiques dans le système d'information 2. Pour rappel, dans le mode de réalisation décrit ici, tous les nœuds du graphe sont considérés comme critiques : ces étapes consistent donc à s'assurer que le module d'évaluation 4B a bien réalisé l'étape E40 pour chaque nœud n du graphe.

Puis, le module de détermination 4C détermine une métrique de sécurité globale R(i) pour le système d'information 2 pour l'instant Ti (i.e. et l'état du système d'information en découlant), en cumulant les métriques de sécurité obtenues sur tous les nœuds critiques du graphe G(Ti) (étape E50). Plus précisément, dans le mode de réalisation décrit ici :

$$R(i) = \sum_{n \in G(Ti)} R_{,n}$$

Les étapes E40 et E50 sont ensuite réitérées pour chacun des instants T2 à T4 (étape test E60, étape d'incrémentation le cas échéant E70).

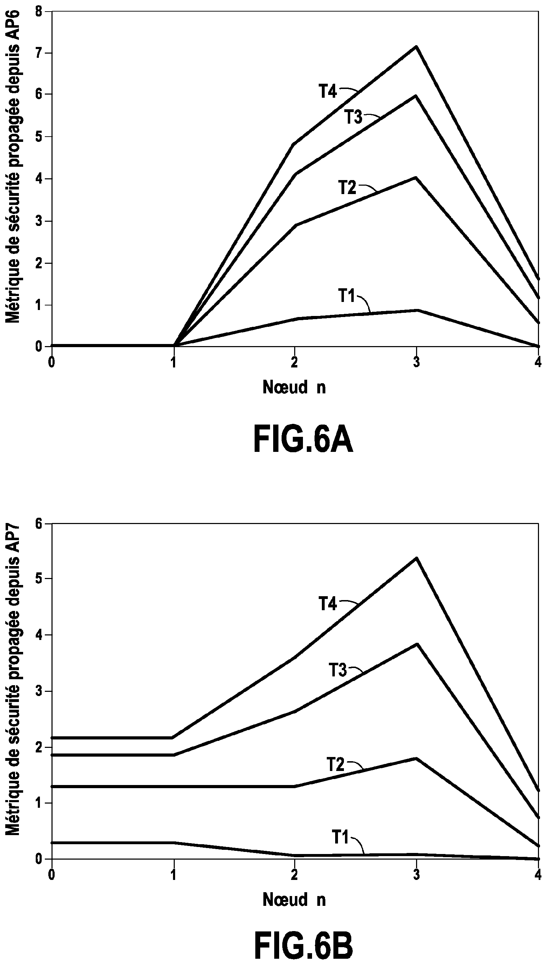

Les **figures 6A à 6D** illustrent les différentes métriques évaluées au cours du procédé de surveillance dans l'exemple de la figure 1.

Ainsi, la figure 6A montre la métrique de sécurité propagée évaluée entre le point d'accès 6 (terminal de l'utilisateur Intranet) et les différents nœuds du système d'information 2, pour les différents instants T1, T2, T3, T4, autrement dit, pour différents états du système d'information 2.

La figure 6B montre la métrique de sécurité propagée évaluée entre le point d'accès 7 (terminal de l'utilisateur Internet) et les différents nœuds du système d'information 2, aux différents instants T1, T2, T3, T4.

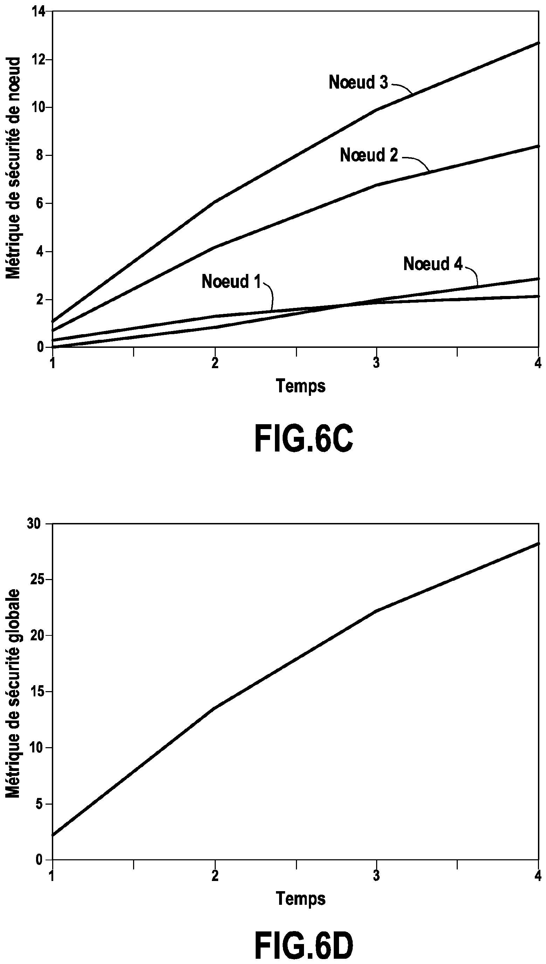

La figure 6C illustre la métrique de sécurité de différents nœuds du graphe en fonction du temps.

La figure 6D illustre la métrique de sécurité globale du système d'information en fonction du temps. On constate que sans la mise en place de contre-mesures, le risque encouru augmente avec le temps, c'est-à-dire au fil des instants T1, T2, T3 et T4.

Une fois les 4 instants T1, T2, T3 et T4 traités, le dispositif de surveillance 4 dispose de 4 métriques de sécurité globales évaluées pour le système d'information 2 correspondant à 4 états distincts du système d'information 2.

Ces métriques sont fournies au module de surveillance 4D de la sécurité du système d'information 2. Dans le mode de réalisation décrit ici, celui-ci compare les métriques de sécurité obtenues par rapport à un seuil de risque prédéfini THR, par exemple expérimentalement (étape test E80). Si l'une des métriques franchit le seuil (réponse oui à l'étape E80), une alerte est émise par le module de surveillance 4D, par exemple à destination de l'administrateur du système d'information 2 (étape E90). Sinon, aucune alerte n'est remontée.

On note que l'alerte émise par le module de surveillance 4D peut déclencher la mise en œuvre de contre-mesures par l'administrateur du système d'information 2 pour améliorer la sécurité du système d'information 2. Ces contre-mesures peuvent être utilisées par tous les nœuds ou seulement certains d'entre nœuds. A titre d'exemples, on peut citer :

- l'installation d'un pare-feu (« firewall » en anglais) ;
- des critères d'accès exigeants comprenant un couple identifiant/mot de passe ainsi qu'un code de contrôle ;
- une authentification par carte à puce.

Dans le mode de réalisation décrit ici, on a considéré une hypothèse de pire cas concernant les attaques perpétrées à rencontre du système d'information 2 (attaquant maximisant la propagation du risque dans le système d'information). Toutefois, en variante, il est possible de ne faire aucune hypothèse sur le type d'attaques menées. Dans ce cas, préférentiellement, pour calculer la métrique d'occurrence propagée $P_{ap,n}$ entre un point d'accès et un nœud n, on considère tous les chemins du graphe partant du point d'accès ap et arrivant au nœud n et on calcule une moyenne sur ces chemins des métriques d'occurrence propagées obtenues sur chaque chemin.

ANNEXE 1

Forme générique du fichier XML contenant la topologie du système d'information 2

```
<topologie>
<lien>
<element_1>nom_cpe</ element_1>
<element_2> nom_cpe </ element_2>
<accessibilite>a</ accessibilite >
</lien>
<lien>
</lien>
</topologie>
```

**Revendications**

1. Procédé de surveillance de la sécurité d'un système d'information (2) comprenant une pluralité d'éléments (3-1 ; 3-4) et au moins un point d'accès (6,7) à ces éléments, au moins un élément du système d'information étant susceptible d'être affecté par au moins une vulnérabilité, chaque vulnérabilité susceptible d'affecter un élément étant associée à une probabilité d'occurrence et à un impact sur l'élément, ledit procédé de surveillance comprenant, pour au moins un état du système d'information :

   - une étape (E10) de modélisation du système d'information dans ledit état par un graphe comprenant une pluralité de nœuds, chaque nœud du graphe correspondant à un couple formé d'un élément et d'une vulnérabilité susceptible de l'affecter ou à un point d'accès, ledit graphe étant tel que deux nœuds du graphe dits premier et deuxième nœuds sont reliés par un arc :

      ◦ bidirectionnel, si lesdits nœuds correspondent au même élément ;
      ◦ orienté du premier nœud vers le deuxième nœud, si l'exploitation lors d'une attaque depuis un point d'accès de ladite vulnérabilité du premier nœud entraine l'exploitation de ladite vulnérabilité du deuxième nœud,

   ledit arc étant associé à une métrique dite d'accessibilité mesurant une fréquence de connexion dans le système d'information entre l'élément du premier nœud et l'élément du deuxième nœud correspondant audit état du système d'information ;
   - une étape d'évaluation (E40), pour chaque nœud d'un ensemble de nœuds du graphe identifiés comme critiques (E30), d'une métrique de sécurité du nœud représentant un niveau de risque encouru par l'élément du nœud d'être affecté par la vulnérabilité de ce nœud lors d'attaques menées contre le système d'information depuis ledit au moins un point d'accès, la métrique de sécurité du nœud étant évaluée en utilisant l'impact associé à la vulnérabilité du nœud, ainsi que les probabilités d'occurrence des vulnérabilités des nœuds et les métriques d'accessibilité des arcs d'au moins un chemin du graphe existant entre le nœud et ledit au moins un point d'accès ;
   - une étape de détermination (E50) d'une métrique de sécurité globale du système d'information dans ledit état en cumulant les métriques de sécurité évaluées des nœuds de l'ensemble de nœuds critiques du graphe ;

   ledit procédé de surveillance comprenant en outre une étape de surveillance (E80,E90) de la sécurité du système d'information utilisant la métrique de sécurité globale du système d'information déterminée correspondant audit au moins un état.

2. Procédé selon la revendication 1 dans lequel l'ensemble déterminé de nœuds critiques du graphe comprend tous les nœuds du graphe.

3. Procédé selon la revendication 1 ou 2 dans lequel l'étape d'évaluation (E40) de la métrique de sécurité d'un nœud comprend, pour chaque point d'accès :

   - une détermination (E42) d'un plus court chemin entre ce point d'accès et ledit nœud ;
   - une évaluation (E42) d'une métrique de sécurité dite propagée entre le point d'accès et ledit nœud sur le plus court chemin, en utilisant :

      ◦ l'impact de la vulnérabilité du nœud sur l'élément du nœud, et
      ◦ les probabilités d'occurrence des vulnérabilités des nœuds et les métriques d'accessibilité des arcs appartenant au plus court chemin ;

la métrique de sécurité du nœud étant évaluée (E43) en cumulant les métriques de sécurité propagées évaluées entre chaque point d'accès et ce nœud.

4. Procédé selon la revendication 3 dans lequel la métrique de sécurité propagée entre le point d'accès et le nœud sur le plus court chemin est égale au produit de l'impact de la vulnérabilité du nœud sur l'élément du nœud et d'une métrique dite d'occurrence propagée sur le plus court chemin, cette métrique d'occurrence propagée étant obtenue en sommant sur chaque nœud du plus court chemin, le logarithme de l'inverse du produit de la métrique d'accessibilité associée à l'arc reliant ce nœud au nœud suivant sur le chemin et de la fréquence d'occurrence de la vulnérabilité du nœud suivant.

5. Procédé selon l'une quelconque des revendications 1 à 4 dans lequel une métrique de sécurité globale est déterminée pour une pluralité d'états distincts du système d'information atteints à différents instants par le système d'information.

6. Procédé selon l'une quelconque des revendications 1 à 5 dans lequel la probabilité d'occurrence de la vulnérabilité d'un nœud n varie dans le temps selon une fonction $f_n$ telle que :

$$f_n(t) = 1 - (1 - p_n)^{\alpha_n t}$$

où t désigne le temps, $p_n$ la probabilité d'occurrence de la vulnérabilité du nœud n pour un état déterminé du système d'information et $\alpha_n$ est un paramètre compris entre 0 et 1 et défini pour le nœud n.

7. Procédé selon l'une quelconque des revendications 1 à 6 dans lequel la métrique d'accessibilité d'un arc reliant un nœud n1 à un nœud n2 varie dans le temps selon une fonction $g_{n1,n2}$ telle que :

$$g_{n1,n2}(t) = a_{n1,n2} + \left(1 - a_{n1,n2}\right)\frac{\beta(t - 1)}{t}$$

où t désigne le temps, $a_{n1,n2}$ la métrique d'accessibilité de l'arc reliant le nœud n1 au nœud n2 pour un état déterminé du système d'information, et $\beta$ est un paramètre compris entre 0 et 1.

8. Procédé selon l'une quelconque des revendications 1 à 6 dans lequel la métrique d'accessibilité d'un arc reliant un nœud n1 à un nœud n2 à un instant t est prédite au moyen d'une combinaison linéaire de métriques d'accessibilité observées entre les mêmes nœuds à des instants précédents espacés d'une même période T.

9. Procédé selon l'une quelconque des revendications 1 à 8 dans lequel les éléments et/ou les vulnérabilités correspondant aux nœuds du graphe modélisant le système d'informations sont déterminés en interrogeant de façon périodique ou prédéterminée au moins une base décrivant une topologie du système d'information et/ou une base décrivant des vulnérabilités susceptibles d'affecter des éléments du système d'information.

10. Procédé selon la revendication 9 comprenant une étape de détection d'au moins un changement dans ladite au moins une base décrivant la topologie du système d'information résultant en un nouvel état du système d'information, ladite étape de détection déclenchant l'application des étapes du procédé de surveillance au nouvel état du système d'information.

11. Procédé selon la revendication 9 ou 10 comprenant une étape de détection d'au moins un changement dans ladite au moins une base décrivant les vulnérabilités susceptibles d'affecter des éléments du système d'information, ladite étape de détection déclenchant la mise en œuvre des étapes du procédé de surveillance en tenant compte dudit au moins un changement détecté.

12. Programme d'ordinateur comportant des instructions pour l'exécution des étapes du procédé de surveillance selon l'une quelconque des revendications 1 à 11 lorsque ledit programme est exécuté par un ordinateur.

13. Support d'enregistrement lisible par un ordinateur sur lequel est enregistré un programme d'ordinateur comprenant des instructions pour l'exécution des étapes du procédé de surveillance selon l'une quelconque des revendications 1 à 11.

**14.** Dispositif de surveillance (4) de la sécurité d'un système d'information (2) comprenant une pluralité d'éléments et au moins un point d'accès à ces éléments, au moins un élément du système d'information étant susceptible d'être affecté par au moins une vulnérabilité, chaque vulnérabilité susceptible d'affecter un élément étant associée à une probabilité d'occurrence et à un impact sur l'élément, ledit dispositif de surveillance comprenant une pluralité de modules activés pour au moins un état du système d'information, lesdits modules comprenant :

- un module de modélisation (4A), configuré pour modéliser le système d'information dans ledit état par un graphe comprenant une pluralité de nœuds, chaque nœud du graphe correspondant à un couple formé d'un élément et d'une vulnérabilité susceptible de l'endommager ou à un point d'accès, ledit graphe étant tel que deux nœuds du graphe dits premier et deuxième nœuds sont reliés par un arc :

  ∘ bidirectionnel, si lesdits nœuds correspondent au même élément ;
  ∘ orienté du premier nœud vers le deuxième nœud, si l'exploitation lors d'une attaque depuis un point d'accès de ladite vulnérabilité du premier nœud entraine l'exploitation de ladite vulnérabilité du deuxième nœud,

ledit arc étant associé à une métrique dite d'accessibilité mesurant une fréquence de connexion dans le système d'information entre l'élément du premier nœud et l'élément du deuxième nœud correspondant audit état du système d'information ;
- un module d'évaluation (4B), configuré pour évaluer pour chaque nœud d'un ensemble de nœuds du graphe identifiés comme critiques, une métrique de sécurité du nœud représentant un niveau de risque encouru par l'élément du nœud d'être affecté par la vulnérabilité de ce nœud lors d'attaques menées contre le système d'information depuis ledit au moins un point d'accès, la métrique de sécurité du nœud étant évaluée en utilisant l'impact associé à la vulnérabilité du nœud, ainsi que les probabilités d'occurrence des vulnérabilités des nœuds et les métriques d'accessibilité des arcs d'au moins un chemin du graphe existant entre le nœud et ledit au moins un point d'accès ;
- un module de détermination (4C), configuré pour déterminer une métrique de sécurité globale du système d'information dans ledit état en cumulant les métriques de sécurité évaluées des nœuds de l'ensemble de nœuds critiques du graphe ;

ledit dispositif de surveillance comprenant en outre un module de surveillance (4D) de la sécurité du système d'information configuré pour utiliser la métrique de sécurité globale du système d'information déterminée correspondant audit au moins un état.

**15.** Système de communications (1) comprenant :

- un système d'information (2) comprenant une pluralité d'éléments et au moins un point d'accès à ces éléments ; et
- un dispositif de surveillance (4) de la sécurité du système d'information selon la revendication 14.

**Patentansprüche**

**1.** Verfahren zur Überwachung der Sicherheit eines Informationssystems (2), das eine Mehrzahl von Elementen (3-1; 3-4) und mindestens einen Zugangspunkt (6, 7) zu diesen Elementen umfasst, wobei mindestens ein Element des Informationssystems durch mindestens eine Schwachstelle beeinträchtigt werden könnte, wobei jede Schwachstelle, die ein Element beeinträchtigen könnte, einer Eintrittswahrscheinlichkeit und einer Auswirkung auf das Element zugeordnet ist, wobei das Überwachungsverfahren für mindestens einen Zustand des Informationssystems umfasst:

- einen Schritt (E10) des Modellierens des Informationssystems in dem Zustand durch einen Graphen, der eine Mehrzahl von Knoten umfasst, wobei jeder Knoten des Graphen einem Paar, das aus einem Element und einer Schwachstelle, die es beeinträchtigen könnte, gebildet wird, oder einem Zugangspunkt entspricht, wobei der Graph dergestalt ist, dass zwei Knoten des Graphen, erster und zweiter Knoten genannt, durch eine Kante verbunden sind:

  ∘ die beidseitig gerichtet ist, wenn die Knoten demselben Element entsprechen;

◦ die vom ersten Knoten zum zweiten Knoten gerichtet ist, wenn die Ausnutzung der Schwachstelle des ersten Knotens bei einem Angriff von einem ersten Zugangspunkt aus die Ausnutzung der Schwachstelle des zweiten Knotens nach sich zieht,

wobei die Kante einer Metrik, Zugänglichkeitsmetrik genannt, zugeordnet ist, die eine Verbindungshäufigkeit in dem Informationssystem zwischen dem Element des ersten Knotens und dem Element des zweiten Knotens misst, die dem Zustand des Informationssystems entspricht;

- einen Schritt des Bewertens (E40), für jeden Knoten einer Menge von als kritisch identifizierten (E30) Knoten des Graphen, einer Sicherheitsmetrik des Knotens, die einen Grad des von dem Element des Knotens eingegangenen Risikos darstellt, bei Angriffen, die von dem mindestens einen Zugangspunkt gegen das Informationssystem geführt werden, durch die Schwachstelle dieses Knotens beeinträchtigt zu werden, wobei die Sicherheitsmetrik des Knotens bewertet wird, indem die der Schwachstelle des Knotens zugeordnete Auswirkung sowie die Eintrittswahrscheinlichkeiten der Schwachstellen der Knoten und die Zugänglichkeitsmetriken der Kanten mindestens eines Pfades des Graphen zwischen dem Knoten und dem mindestens einen Zugangspunkt verwendet werden;

- einen Schritt des Bestimmens (E50) einer Gesamtsicherheitsmetrik des Informationssystems in dem Zustand, indem die bewerteten Sicherheitsmetriken der Knoten der Menge kritischer Knoten des Graphen kumuliert werden;

wobei das Überwachungsverfahren ferner einen Schritt des Überwachens (E80, E90) der Sicherheit des Informationssystems umfasst, der die bestimmte Gesamtsicherheitsmetrik des Informationssystems verwendet, die dem mindestens einen Zustand entspricht.

2. Verfahren nach Anspruch 1, bei dem die bestimmte Menge kritischer Knoten des Graphen alle Knoten des Graphen umfasst.

3. Verfahren nach Anspruch 1 oder 2, bei dem der Schritt des Bewertens (E40) der Sicherheitsmetrik eines Knotens für jeden Zugangspunkt umfasst:

- eine Bestimmung (E42) eines kürzesten Pfades zwischen diesem Zugangspunkt und dem Knoten;
- eine Bewertung (E42) einer sogenannten propagierten Sicherheitsmetrik zwischen dem Zugangspunkt und dem Knoten über den kürzesten Pfad, wobei verwendet werden:

◦ die Auswirkung der Schwachstelle des Knotens auf das Element des Knotens und
◦ die Eintrittswahrscheinlichkeiten der Schwachstellen der Knoten und der Zugänglichkeitsmetriken der Kanten, die zum kürzesten Pfad gehören;

wobei die Sicherheitsmetrik des Knotens bewertet (E43) wird, indem die bewerteten propagierten Sicherheitsmetriken zwischen jedem Zugangspunkt und diesem Knoten kumuliert werden.

4. Verfahren nach Anspruch 3, bei dem die propagierte Sicherheitsmetrik zwischen dem Zugangspunkt und dem Knoten über den kürzesten Pfad gleich dem Produkt aus der Auswirkung der Schwachstelle des Knotens auf das Element des Knotens und aus einer Metrik, propagierte Eintrittsmetrik genannt, über den kürzesten Pfad ist, wobei diese propagierte Eintrittsmetrik erhalten wird, indem für jeden Knoten des kürzesten Pfades der Logarithmus des Kehrwerts des Produkts aus der Zugänglichkeitsmetrik, die der diesen Knoten mit dem folgenden Knoten über den Pfad verbindenden Kante zugeordnet ist, und aus der Eintrittshäufigkeit der Schwachstelle des nächstens Knotens addiert wird.

5. Verfahren nach einem der Ansprüche 1 bis 4, bei dem eine Gesamtsicherheitsmetrik für eine Mehrzahl verschiedener Zustände des Informationssystems bestimmt wird, die vom Informationssystem zu verschiedenen Zeitpunkten erreicht werden.

6. Verfahren nach einem der Ansprüche 1 bis 5, bei dem die Eintrittswahrscheinlichkeit der Schwachstelle eines Knotens n im Laufe der Zeit gemäß einer Funktion $f_n$ variiert, so dass:

$$f_n(t) = 1 - (1 - p_n)^{\alpha_n t}$$

worin t die Zeit, $p_n$ die Eintrittswahrscheinlichkeit der Schwachstelle des Knotens n für einen bestimmten Zustand des Informationssystems und $\alpha_n$ ein für den Knoten n definierter Parameter zwischen 0 und 1 ist.

7. Verfahren nach einem der Ansprüche 1 bis 6, bei dem die Zugänglichkeitsmetrik einer Kante, die einen Knoten n1 mit einem Knoten n2 verbindet, im Laufe der Zeit gemäß einer Funktion $g_{n1,n2}$ variiert, so dass:

$$g_{n1,n2}(t) = a_{n1,n2} + (1 - a_{n1,n2})\frac{\beta(t-1)}{t}$$

worin t die Zeit, $a_{n1,n2}$ die Zugänglichkeitsmetrik der den Knoten n1 mit dem Knoten n2 verbindenden Kante für einen bestimmten Zustand des Informationssystems und $\beta$ ein Parameter zwischen 0 und 1 ist.

8. Verfahren nach einem der Ansprüche 1 bis 6, bei dem die Zugänglichkeitsmetrik einer einen Knoten n1 mit einem Knoten n2 verbindenden Kante zu einem Zeitpunkt t mittels einer linearen Kombination von Zugänglichkeitsmetriken vorhergesagt wird, die zwischen denselben Knoten zu früheren Zeitpunkten beobachtet wurden, die um die gleiche Periode T beabstandet sind.

9. Verfahren nach einem der Ansprüche 1 bis 8, bei dem die Elemente und/oder die Schwachstellen, die den Knoten des das Informationssystem modellierenden Graphen entsprechen, bestimmt werden, indem auf periodische oder vorbestimmte Weise mindestens eine Datenbank, die eine Topologie des Informationssystems beschreibt, und/oder eine Datenbank, die Schwachstellen beschreibt, Elemente des Informationssystems beeinträchtigen könnten, abgefragt wird.

10. Verfahren nach Anspruch 9, umfassend einen Schritt des Detektierens mindestens einer Änderung in der mindestens einen die Topologie des Informationssystems beschreibenden Datenbank, die zu einem neuen Zustand des Informationssystems führt, wobei der Schritt des Detektierens die Anwendung der Schritte des Überwachungsverfahrens auf den neuen Zustand des Informationssystems auslöst.

11. Verfahren nach Anspruch 9 oder 10, umfassend einen Schritt des Detektierens mindestens einer Änderung in der mindestens einen Datenbank, welche die Schwachstellen, die Elemente des Informationssystems beeinträchtigen könnten, wobei der Schritt des Detektierens die Ausführung der Schritte des Überwachungsverfahrens unter Berücksichtigung der mindestens einen detektierten Änderung auslöst.

12. Computerprogramm, das Befehle umfasst, die bei der Ausführung des Programms durch einen Computer die Schritte des Überwachungsverfahrens nach einem der Ansprüche 1 bis 11 ausführen.

13. Computerlesbares Speichermedium, auf dem ein Computerprogramm gespeichert ist, das Befehle zur Ausführung der Schritte des Überwachungsverfahrens nach einem der Ansprüche 1 bis 11 umfasst.

14. Überwachungsvorrichtung (4) zur Überwachung der Sicherheit eines Informationssystems (2), das eine Mehrzahl von Elementen und mindestens einen Zugangspunkt zu diesen Elementen umfasst, wobei mindestens ein Element des Informationssystems durch mindestens eine Schwachstelle beeinträchtigt werden könnte, wobei jede Schwachstelle, die ein Element beeinträchtigen könnte, einer Eintrittswahrscheinlichkeit und einer Auswirkung auf das Element zugeordnet ist, wobei die Überwachungsvorrichtung eine Mehrzahl von Modulen umfasst, die für mindestens einen Zustand des Informationssystems aktiviert sind, wobei die Module umfassen:

- ein Modellierungsmodul (4A), das dazu ausgestaltet ist, das Informationssystem in dem Zustand durch einen Graphen zu modellieren, der eine Mehrzahl von Knoten umfasst, wobei jeder Knoten des Graphen einem Paar, das aus einem Element und einer Schwachstelle, die es beschädigen könnte, gebildet wird, oder einem Zugangspunkt entspricht, wobei der Graph dergestalt ist, dass zwei Knoten des Graphen, erster und zweiter Knoten genannt, durch eine Kante verbunden sind:

◦ die beidseitig gerichtet ist, wenn die Knoten demselben Element entsprechen;
◦ die vom ersten Knoten zum zweiten Knoten gerichtet ist, wenn die Ausnutzung der Schwachstelle des ersten Knotens bei einem Angriff von einem ersten Zugangspunkt aus die Ausnutzung der Schwachstelle des zweiten Knotens nach sich zieht,

wobei die Kante einer Metrik, Zugänglichkeitsmetrik genannt, zugeordnet ist, die eine Verbindungshäufigkeit in dem Informationssystem zwischen dem Element des ersten Knotens und dem Element des zweiten Knotens misst, die dem Zustand des Informationssystems entspricht;

- ein Bewertungsmodul (4B), das dazu ausgestaltet ist, für jeden Knoten einer Menge von als kritisch identifizierten Knoten des Graphen, eine Sicherheitsmetrik des Knotens zu bewerten, die einen Grad des von dem Element des Knotens eingegangenen Risikos darstellt, bei Angriffen, die von dem mindestens einen Zugangspunkt gegen das Informationssystem geführt werden, durch die Schwachstelle dieses Knotens beeinträchtigt zu werden, wobei die Sicherheitsmetrik des Knotens bewertet wird, indem die der Schwachstelle des Knotens zugeordnete Auswirkung sowie die Eintrittswahrscheinlichkeiten der Schwachstellen der Knoten und die Zugänglichkeitsmetriken der Kanten mindestens eines Pfades des Graphen zwischen dem Knoten und dem mindestens einen Zugangspunkt verwendet werden;

- ein Bestimmungsmodul (4C), das dazu ausgestaltet ist, eine Gesamtsicherheitsmetrik des Informationssystems in dem Zustand zu bewerten, indem die bewerteten Sicherheitsmetriken der Knoten der Menge kritischer Knoten des Graphen addiert werden;

wobei die Überwachungsvorrichtung ferner ein Überwachungsmodul (4D) zum Überwachen der Sicherheit des Informationssystems umfasst, das dazu ausgestaltet ist, die dem mindestens einen Zustand entsprechende bestimmte Gesamtsicherheitsmetrik des Informationssystems zu verwenden.

**15.** Kommunikationssystem (1) umfassend:

- ein Informationssystem (2), das eine Mehrzahl von Elementen und mindestens einen Zugangspunkt zu diesen Elementen umfasst; und
- eine Überwachungsvorrichtung (4) zur Überwachung der Sicherheit des Informationssystems nach Anspruch 14.

**Claims**

**1.** Method for monitoring the security of an information system (2) comprising a plurality of elements (3-1; 3-4) and at least one point (6, 7) of access to these elements, at least one element of the information system being liable to be affected by a least one vulnerability, each vulnerability liable to affect an element being associated with a probability of occurrence and with an impact on the element, said monitoring method comprising, for at least one state of the information system:

- a step (E10) of modelling the information system in said state with a graph comprising a plurality of nodes, each node of the graph corresponding to a pair formed from an element and from a vulnerability liable to affect it or to an access point, said graph being such that two nodes of the graph, called first and second nodes, are connected by an arc that is:

  ◦ bidirectional, if said nodes correspond to the same element;
  ◦ oriented from the first node to the second node, if the exploitation during an attack from a point of access of said vulnerability of the first node leads to the exploitation of said vulnerability of the second node,

said arc being associated with a so-called accessibility metric that measures a frequency of connection in the information system between the element of the first node and the element of the second node corresponding to said state of the information system;

- a step (E40) of evaluating, for each node of a set of nodes of the graph that are identified as critical (E30), a security metric of the node representing a level of risk run by the element of the node of being affected by the vulnerability of this node during attacks carried out against the information system from said at least one point of access, the security metric of the node being evaluated using the impact associated with the vulnerability of the node, and the probabilities of occurrence of the vulnerabilities of the nodes and the accessibility metrics of the arcs of at least one path of the graph existing between the node and said at least one point of access;

- a step (E50) of determining an overall security metric of the information system in said state by cumulating the evaluated security metrics of the nodes of the set of critical nodes of the graph;

said monitoring method furthermore comprising a step (E80, E90) of monitoring the security of the information system using the determined overall security metric of the information system corresponding to said at least one state.

2. Method according to Claim 1, wherein the determined set of critical nodes of the graph comprises all the nodes of the graph.

3. Method according to Claim 1 or 2, wherein the step (E40) of evaluating the security metric of a node comprises, for each point of access:

 - determining (E42) a shortest path between this point of access and said node;
 - evaluating (E42) a security metric said to be propagated between the point of access and said node over the shortest path, using:

   ◦ the impact of the vulnerability of the node on the element of the node, and
   ◦ the probabilities of occurrence of the vulnerabilities of the nodes and the accessibility metrics of the arcs belonging to the shortest path;

 the security metric of the node being evaluated (E43) by cumulating the propagated security metrics evaluated between each point of access and this node.

4. Method according to Claim 3, wherein the security metric propagated between the point of access and the node over the shortest path is equal to the product of the impact of the vulnerability of the node on the element of the node and a so-called occurrence metric propagated over the shortest path, this propagated occurrence metric being obtained by summing, on each node of the shortest path, the logarithm of the inverse of the product of the accessibility metric associated with the arc connecting this node to the following node on the path and of the frequency of occurrence of the vulnerability of the following node.

5. Method according to any one of Claims 1 to 4, wherein an overall security metric is determined for a plurality of distinct states of the information system, which are reached at various times by the information system.

6. Method according to any one of Claims 1 to 5, wherein the probability of occurrence of the vulnerability of a node n varies over time according to a function $f_n$ such that:

$$f_n(t) = 1 - (1 - p_n)^{\alpha_n t}$$

where $t$ designates time, $p_n$ the probability of occurrence of the vulnerability of the node n for a determined state of the information system and $\alpha_n$ is a parameter comprised between 0 and 1 and defined for the node n.

7. Method according to any one of Claims 1 to 6, wherein the accessibility metric of an arc connecting a node n1 to a node n2 varies over time according to a function $g_{n1,n2}$ such that:

$$g_{n1,n2}(t) = a_{n1,n2} + \left(1 - a_{n1,n2}\right)\frac{\beta(t - 1)}{t}$$

where $t$ designates time, $a_{n1,n2}$ the accessibility metric of the arc connecting the node n1 to the node n2 for a determined state of the information system, and $\beta$ is a parameter comprised between 0 and 1.

8. Method according to any one of Claims 1 to 6, wherein the accessibility metric of an arc connecting a node n1 to a node n2 at a time t is predicted by means of a linear combination of accessibility metrics observed between the same nodes at preceding times spaced apart by the same period T.

9. Method according to any one of Claims 1 to 8, wherein the elements and/or vulnerabilities corresponding to the nodes of the graph modelling the information system are determined by interrogating in a periodic or predetermined way at least one base describing a topology of the information system and/or one base describing vulnerabilities liable to affect elements of the information system.

10. Method according to Claim 9, comprising a step of detecting at least one change in said at least one base describing the topology of the information system resulting in a new state of the information system, said detecting step triggering the application of the steps of the monitoring method to the new state of the information system.

**11.** Method according to Claim 9 or 10, comprising a step of detecting at least one change in said at least one base describing the vulnerabilities liable to affect elements of the information system, said detecting step triggering the implementation of the steps of the monitoring method taking into account said at least one detected change.

**12.** Computer program containing instructions for executing the steps of the monitoring method according to any one of Claims 1 to 11 when said program is executed by a computer.

**13.** Computer-readable storage medium on which is stored a computer program containing instructions for executing the steps of the monitoring method according to any one of Claims 1 to 11.

**14.** Device (4) for monitoring the security of an information system (2) comprising a plurality of elements and at least one point of access to these elements, at least one element of the information system being liable to be affected by at least one vulnerability, each vulnerability liable to affect an element being associated with a probability of occurrence and with an impact on the element, said monitoring device comprising a plurality of modules that are activated for at least one state of the information system, said modules comprising:

- a modelling module (4A), configured to model the information system in said state with a graph comprising a plurality of nodes, each node of the graph corresponding to a pair formed from an element and from a vulnerability liable to damage it or to an access point, said graph being such that two nodes of the graph, called first and second nodes, are connected by an arc that is:

  ◦ bidirectional, if said nodes correspond to the same element;
  ◦ oriented from the first node to the second node, if the exploitation during an attack from a point of access of said vulnerability of the first node leads to the exploitation of said vulnerability of the second node,

  said arc being associated with a so-called accessibility metric that measures a frequency of connection in the information system between the element of the first node and the element of the second node corresponding to said state of the information system;
- an evaluating module (4B), configured to evaluate, for each node of a set of nodes of the graph that are identified as critical, a security metric of the node representing a level of risk run by the element of the node of being affected by the vulnerability of this node during attacks carried out against the information system from said at least one point of access, the security metric of the node being evaluated using the impact associated with the vulnerability of the node, and the probabilities of occurrence of the vulnerabilities of the nodes and the accessibility metrics of the arcs of at least one path of the graph existing between the node and said at least one point of access;
- a determining module (4C), configured to determine an overall security metric of the information system in said state by cumulating the evaluated security metrics of the nodes of the set of critical nodes of the graph;

said monitoring device furthermore comprising a module (4D) for monitoring the security of the information system, configured to use the determined overall security metric of the information system corresponding to said at least one state.

**15.** Communication system (1) comprising:

- an information system (2) comprising a plurality of elements and at least one point of access to these elements; and
- a device (4) for monitoring the security of the information system according to Claim 14.

1

3-1

6

3-2

2

3-3

7

3-4

5

4A  4B

4C  4D

4

13

FIG.1

8  9  10 PROG

12  11

4

FIG.2

FIG.3

FIG.4

**E10**

$$\boxed{\begin{array}{c} \text{REQ DB5} \\ \Longrightarrow \text{TOPO(2)} \end{array}} \sim \text{E10-1}$$

$$\boxed{\text{OBT AP(2)}} \sim \text{E10-2}$$

$$\boxed{\text{OBT ACC } a^{to}} \sim \text{E10-3}$$

$$\boxed{\text{EVAL ACC } a^{T1}, a^{T2}, a^{T3}, a^{T4}} \sim \text{E10-4}$$

$$\boxed{\begin{array}{c} \text{REQ DB13} \\ \Longrightarrow \text{VULN}, p^{to}, I \end{array}} \sim \text{E10-5}$$

$$\boxed{\text{EVAL } p^{T1}, p^{T2}, p^{T3}, p^{T4}} \sim \text{E10-6}$$

$$\boxed{i=1} \sim \text{E10-7}$$

$$\boxed{\text{OBT G(Ti)}} \sim \text{E10-8}$$

E10-10 $\sim \boxed{i\text{++}}$

non $\diamond\ i=4 ?\ \diamond \sim$ E10-9

oui

$$\boxed{\text{STOP}} \sim \text{E10-11}$$

FIG.5A

FIG.5B

FIG.5C

FIG.5D

**FIG.6A**

**FIG.6B**

**FIG.6C**

**FIG.6D**

**EP 3 479 285 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9210185 B